(19) Europäisches Patentamt
European Patent Office
Office européen des brevets

(11) EP 4 625 637 A1

(12) **EUROPEAN PATENT APPLICATION**
published in accordance with Art. 153(4) EPC

(43) Date of publication:
**01.10.2025 Bulletin 2025/40**

(21) Application number: **23894675.0**

(22) Date of filing: **27.11.2023**

(51) International Patent Classification (IPC):
***H01M 50/178*** *(2021.01)* ***H01G 11/74*** *(2013.01)*
***H01G 11/78*** *(2013.01)* ***H01M 50/105*** *(2021.01)*
***H01M 50/184*** *(2021.01)* ***H01M 50/534*** *(2021.01)*
***H01M 50/557*** *(2021.01)* ***H01M 50/562*** *(2021.01)*

(52) Cooperative Patent Classification (CPC):
**H01G 11/74; H01G 11/78; H01M 50/105; H01M 50/178; H01M 50/184; H01M 50/534; H01M 50/557; H01M 50/562**

(86) International application number:
**PCT/JP2023/042420**

(87) International publication number:
**WO 2024/111673 (30.05.2024 Gazette 2024/22)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.11.2022 JP 2022187983**

(71) Applicant: **Dai Nippon Printing Co., Ltd.**
**Tokyo 162-8001 (JP)**

(72) Inventors:
- **KATOU, Takahiro**
  **Tokyo 162-8001 (JP)**
- **SATAKE, Mizuki**
  **Tokyo 162-8001 (JP)**
- **MIZOSHIRI, Makoto**
  **Tokyo 162-8001 (JP)**
- **KODANI, Kazufumi**
  **Tokyo 162-8001 (JP)**
- **FUJIWARA, Ryo**
  **Tokyo 162-8001 (JP)**

(74) Representative: **Müller-Boré & Partner Patentanwälte PartG mbB**
**Friedenheimer Brücke 21**
**80639 München (DE)**

(54) **METAL TERMINAL ADHESIVE FILM, PRODUCTION METHOD THEREFOR, METAL TERMINAL EQUIPPED WITH METAL TERMINAL ADHESIVE FILM, POWER STORAGE DEVICE EXTERNAL PACKAGING MATERIAL, KIT COMPRISING POWER STORAGE DEVICE EXTERNAL PACKAGING MATERIAL AND METAL TERMINAL ADHESIVE FILM, POWER STORAGE DEVICE, AND PRODUCTION METHOD THEREFOR**

(57) A metal terminal adhesive film for interposition between a metal terminal that is electrically connected to an electrode of a power storage device element and a power storage device external packaging material that seals the power storage device element, said metal terminal adhesive film having at least a polypropylene layer, wherein when the island-in-sea structure of the polypropylene layer in a cross section extending in the thickness direction and the direction parallel to the **TD** is observed in a cross section image obtained using a scanning electron microscope, the ratio of the islands in the sea-island structure of the polypropylene layer is at most 20%.



Processed by Luminess, 75001 PARIS (FR)

## Description

### Technical Field

The present disclosure relates to an adhesive film for metal terminal, a method for manufacturing the adhesive film for metal terminal, a metal terminal with an adhesive film for metal terminal, an exterior material for electrical storage devices, a kit including an exterior material for electrical storage devices and an adhesive film for metal terminal, an electrical storage device, and a method for manufacturing the electrical storage device.

### Background Art

Various types of electrical storage devices have been developed heretofore, and in every electrical storage device, an exterior material for electrical storage devices is an essential member for sealing electrical storage device elements such as an electrode and an electrolyte. Metallic exterior materials for electrical storage devices have been often used heretofore as exterior materials for electrical storage devices, and in recent years, electrical storage devices have been required to be diversified in shape, and desired to be thinner and lighter as performance of, for example, electric cars, hybrid electric cars, personal computers, cameras and mobile phones has been enhanced. However, metallic exterior materials for electrical storage devices that have often been heretofore used have the disadvantage that it is difficult to keep up with diversification in shape, and there is a limit on weight reduction.

Thus, in recent years, a laminated sheet with a base material layer, an adhesive layer, a barrier layer, and a heat-sealable resin layer laminated in the stated order has been proposed as an exterior material for electrical storage devices which is easily processed into diversified shapes and is capable of achieving thickness reduction and weight reduction. When such a laminated film-shaped exterior material for electrical storage devices is used, an electrical storage device element is sealed with the exterior material for electrical storage devices by heat-sealing the peripheral edge portion of the exterior material for electrical storage devices while the heat-sealable resin layers located at the innermost layer of the exterior material for electrical storage devices are opposed to each other.

A metal terminal protrudes from the heat-sealed portion of the exterior material for electrical storage devices, and the electrical storage device element sealed by the exterior material for electrical storage devices is electrically connected to the outside by a metal terminal electrically connected to an electrode of the electrical storage device element. That is, of the portion where the exterior material for electrical storage devices is heat-sealed, a portion where the metal terminal is present is heat-sealed to the metal terminal is sandwiched between heat-sealable resin layers. Since the metal terminal and the heat-sealable resin layer are composed of different materials, adhesion is likely to decrease at an interface between the metal terminal and the heat-sealable resin layer.

Thus, an adhesive film may be disposed between the metal terminal and the heat-sealable resin layer for the purpose of, for example, improving adhesion between the metal terminal and the heat-sealable resin layer. Examples of the adhesive film include those described in Patent Literature 1.

### Citation List

### Patent Literature

PTL 1: Japanese Patent Laid-open Publication No. 2015-79638

### Summary of Invention

### Technical Problem

In recent years, the thickness of an adhesive film disposed between a metal terminal and an exterior material for electrical storage devices tends to increase as the capacity of the electrical storage device increases. As the thickness of the adhesive film increases, an amount of moisture (water vapor) entering the inside of the electrical storage device through the adhesive film also tends to increase. When a large amount of moisture enters the inside of the electrical storage device, various problems such as deterioration of the electrical storage device element occur.

A main object of the present disclosure is to provide an adhesive film for metal terminal interposed between a metal terminal electrically connected to an electrode of an electrical storage device element and an exterior material for electrical storage devices which seals the electrical storage device element, in which when the adhesive film for metal terminal is disposed between the metal terminal and the exterior material for electrical storage devices, water vapor permeation into the inside of the electrical storage device through the adhesive film for metal terminal is suppressed. Another object of the present disclosure is to provide a method for manufacturing the adhesive film for metal terminal, a

metal terminal with an adhesive film for metal terminal, an exterior material for electrical storage devices, a kit including an exterior material for electrical storage devices and the adhesive film for metal terminal, an electrical storage device, and a method for manufacturing the electrical storage device.

## Solution to Problem

The inventors of the present disclosure have extensively conducted studies for solving the above-described problems. As a result, the present inventors have found that in an adhesive film for metal terminal interposed between a metal terminal electrically connected to an electrode of an electrical storage device element and an exterior material for electrical storage devices which seals the electrical storage device element, the adhesive film for metal terminal including at least a polypropylene layer, in which a sea-island structure is observed in a cross-sectional image acquired using a scanning electron microscope for a cross-section of the polypropylene layer in a direction parallel to TD and in a thickness direction, and an island portion ratio of the sea-island structure of the polypropylene layer is 20% or less, when the adhesive film for metal terminal is disposed between the metal terminal and the exterior material for electrical storage devices, water vapor permeation into the inside of the electrical storage device through the adhesive film for metal terminal is suppressed. The present disclosure is an invention that has been completed by further conducting studies based on the above-mentioned findings.

That is, the present disclosure provides an invention of an aspect as described below.

An adhesive film for metal terminal interposed between a metal terminal electrically connected to an electrode of an electrical storage device element and an exterior material for electrical storage devices which seals the electrical storage device element, the adhesive film for metal terminal including at least a polypropylene layer, in which a sea-island structure is observed in a cross-sectional image acquired using a scanning electron microscope for a cross-section of the polypropylene layer in a direction parallel to TD and in a thickness direction, and an island portion ratio of the sea-island structure of the polypropylene layer is 20% or less.

## Advantageous Effects of Invention

According to the present disclosure, it is possible to provide an adhesive film for metal terminal interposed between a metal terminal electrically connected to an electrode of an electrical storage device element and an exterior material for electrical storage devices which seals the electrical storage device element, in which when the adhesive film for metal terminal is disposed between the metal terminal and the exterior material for electrical storage devices, water vapor permeation into the inside of the electrical storage device through the adhesive film for metal terminal is suppressed. Another object of the present disclosure is to provide a method for manufacturing the adhesive film for metal terminal, a metal terminal with an adhesive film for metal terminal, an exterior material for electrical storage devices, a kit including an exterior material for electrical storage devices and an adhesive film for metal terminal, an electrical storage device, and a method for manufacturing the electrical storage device. Brief Description of Drawings

[Fig. 1] Fig. 1 is a schematic plan view of an electrical storage device of the present disclosure.
[Fig. 2] Fig. 2 is a schematic sectional view taken along line A-A' in Fig. 1.
[Fig. 3] Fig. 3 is a schematic sectional view taken along line B-B' in Fig. 1.
[Fig. 4] Fig. 4 is a schematic sectional view of an adhesive film for metal terminal according to the present disclosure.
[Fig. 5] Fig. 5 is a schematic sectional view of an adhesive film for metal terminal according to the present disclosure.
[Fig. 6] Fig. 6 is a schematic sectional view of an adhesive film for metal terminal according to the present disclosure.
[Fig. 7] Fig. 7 is a schematic sectional view of an adhesive film for metal terminal according to the present disclosure.
[Fig. 8] Fig. 8 is a schematic sectional view of an exterior material for electrical storage devices according to the present disclosure.
[Fig. 9] Fig. 9 is a schematic view for explaining a method for measuring water vapor permeability of the adhesive film for metal terminal of the present disclosure.
[Fig. 10] Fig. 10 is a schematic view for explaining a method for measuring adhesive strength between an adhesive film and an exterior material.
[Fig. 11] Fig. 11 is a schematic view for explaining a method for measuring adhesive strength between an adhesive film and an exterior material.
[Fig. 12] Fig. 12 is a schematic view for explaining a method for measuring adhesive strength between an adhesive film and an exterior material.
[Fig. 13] Fig. 13 is a schematic view for explaining a method for measuring adhesive strength between an adhesive film and an exterior material.

Description of Embodiments

An adhesive film for metal terminal of the present disclosure is an adhesive film for metal terminal interposed between a metal terminal electrically connected to an electrode of an electrical storage device element and an exterior material for electrical storage devices which seals the electrical storage device element, the adhesive film for metal terminal including at least a polypropylene layer, in which a sea-island structure is observed in a cross-sectional image acquired using a scanning electron microscope for a cross-section of the polypropylene layer in a direction parallel to TD and in a thickness direction, and an island portion ratio of the sea-island structure of the polypropylene layer is 20% or less.

Since the adhesive film for metal terminal of the present disclosure has such characteristics, when the adhesive film for metal terminal is disposed between the metal terminal and the exterior material for electrical storage devices, water vapor permeation into the electrical storage device through the adhesive film for metal terminal is suppressed.

The electrical storage device according to the present disclosure is an electrical storage device including: an electrical storage device element including at least a positive electrode, a negative electrode, and an electrolyte; an exterior material for electrical storage devices which seals the electrical storage device element; and a metal terminal electrically connected to each of the positive electrode and the negative electrode and protruding to the outside of the exterior material for electrical storage devices, in which the adhesive film for metal terminal according to the present disclosure is interposed between the metal terminal and the exterior material for electrical storage devices.

Hereinafter, the adhesive film for metal terminal, the method for manufacturing the adhesive film for metal terminal, the electrical storage device and the method for manufacturing the electrical storage device according to the present disclosure will be described in detail.

For the numerical range in this specification, a numerical range indicated by the term "A to B" means "A or more" and "B or less". For example, the expression of "2 to 15 mm" means 2 mm or more and 15 mm or less. In numerical ranges serially described in the present disclosure, an upper limit value or a lower limit value described for a numerical range may be replaced by an upper limit value or a lower limit value of one of other serially described numerical ranges. Upper limit values, upper and lower limit values, or lower limit values, which are described for different ranges, may be combined to form a numerical range. In numerical ranges described in the present disclosure, an upper limit value or a lower limit value described for a numerical range may be replaced by a value shown in an example.

Furthermore, as a method for confirming MD of the adhesive film for metal terminal, there is a method for observing a cross-section of the adhesive film for metal terminal with an electron microscope to confirm a sea-island structure. In the method, the direction parallel to a cross-section in which the average of the diameters of the island shapes in a direction perpendicular to the thickness direction of the adhesive film for metal terminal is maximum can be determined as MD. Specifically, a length-direction cross-section of the adhesive film for metal terminal and cross-sections (a total of 10 cross-sections) at angular intervals of 10 degrees from a direction parallel to the length-direction cross-section to a direction perpendicular to the length-direction cross-section are observed with an electron microscope photograph to examine sea-island structures. Next, in each cross-section, the shape of each island is observed. For the shape of each island, the linear distance between the leftmost end in a direction perpendicular to the thickness direction of the adhesive film for metal terminal and the rightmost end in the perpendicular direction is defined as a diameter y. In each cross-section, the average of the top 20 diameters y in descending order of the diameter y of the island shape is calculated. The direction parallel to a cross-section having the largest average of the diameters y of the island shapes is determined as MD. For example, the heat shrinkage ratio after the adhesive film for metal terminal is left standing in an environment at 150°C for 2 minutes is measured, and a direction in which a larger shrinkage ratio is obtained is determined as MD.

1. Adhesive film for metal terminal

The adhesive film for metal terminal according to the present disclosure is interposed between a metal terminal electrically connected to an electrode of an electrical storage device element and an exterior material for electrical storage devices for sealing the electrical storage device element. Specifically, as shown in, for example, Figs. 1 to 3, an adhesive film 1 for metal terminal according to the present disclosure is interposed between a metal terminal 2 electrically connected to an electrode of an electrical storage device element 4 and an exterior material 3 for electrical storage devices for sealing the electrical storage device element 4. The metal terminal 2 protrudes to the outside of the exterior material 3 for electrical storage devices, and is sandwiched between the exterior materials 3 for electrical storage devices with the adhesive film 1 for metal terminal at a peripheral edge portion 3a of the heat-sealed exterior material 3 for electrical storage devices.

In the present disclosure, the step of temporarily bonding the adhesive film for metal terminal to a metal terminal is performed under the conditions of a temperature of, for example, about 140 to 160°C, a pressure of about 0.01 to 1.0 MPa, a time of about 3 to 15 seconds, and about 3 to 6 times, and the primary bonding step is performed under the conditions of, for example, a temperature of about 160 to 240°C, a pressure of about 0.01 to 1.0 MPa, a time of about 3 to 15 seconds, and about 1 to 3 times. In heat-sealing performed with the metal terminal with adhesive film for metal terminal interposed in the exterior material for electrical storage devices, the heating temperature is typically in the range of about 180 to 210°C, the

pressure is typically about 1.0 to 5.0 MPa, the time is about 1 to 5 seconds, and the number of times of heat-sealing is about 1.

An adhesive film 1 for metal terminal (hereinafter, the film may be simply referred to as an "adhesive film") of the present disclosure is provided in order to enhance adhesion between a metal terminal 2 and an exterior material 3 for electrical storage devices. Enhancement of adhesion between the metal terminal 2 and exterior material 3 for electrical storage devices improves the sealing property of the electrical storage device element 4. As described above, the electrical storage device element is sealed such that the metal terminal 2 electrically connected to the electrode of the electrical storage device element 4 protrudes to the outside of the exterior material 3 for electrical storage devices when the electrical storage device element 4 is heat-sealed. Here, the metal terminal 2 formed of metal and a heat-sealable resin layer 35 (a layer formed of a heat-sealable resin such as a polyolefin) located in the innermost layer of the exterior material 3 for electrical storage devices are formed of different materials, and therefore when such an adhesive film is not used, the sealing property of the electrical storage device element is likely to be low at the interface between the metal terminal 2 and the heat-sealable resin layer 35.

[Polypropylene layer 11]

The adhesive film 1 for metal terminal of the present disclosure includes a polypropylene layer having an island portion ratio of 20% or less in a sea-island structure described later. In the present disclosure, a polypropylene layer having an island portion ratio of 20% or less in the sea-island structure to be described later is referred to as a "polypropylene layer 11". As described later, in a case where the adhesive film 1 for metal terminal of the present disclosure has multiple layers, the adhesive film 1 for metal terminal may further include a polypropylene layer in which the island portion ratio of the sea-island structure exceeds 20% in addition to the polypropylene layer 11. For example, a first layer 12a, a second layer 12b, a third layer 12c, a fourth layer 12d, a base material, and the like described later may be a polypropylene layer in which the island portion ratio of the sea-island structure exceeds 20%.

In the polypropylene layer 11, the island portion of the sea-island structure is a region in which ethylene is a main component (for example, the ethylene content is 80 mass% or more, 90 mass% or more, 95 mass% or more, 99 mass% or more, or the like), and the sea portion of the sea-island structure is a region in which polypropylene is a main component (for example, the propylene content is 80 mass% or more, 90 mass% or more, 95 mass% or more, 99 mass% or more, or the like).

The adhesive film 1 for metal terminal of the present disclosure includes at least one polypropylene layer 11. The adhesive film 1 for metal terminal may be a single layer or a multiple layer. The adhesive film 1 for metal terminal preferably includes, for example, a single layer of the polypropylene layer 11. Fig. 4 shows a diagram in which the adhesive film 1 for metal terminal includes a single layer of the polypropylene layer 11.

Furthermore, in a case where the adhesive film 1 for metal terminal includes multiple layers, the polypropylene layer 11 is preferably a layer that does not constitute a surface of the adhesive film 1 for metal terminal. In a case where the adhesive film 1 for metal terminal includes multiple layers, the adhesive film 1 for metal terminal preferably has a laminated configuration of three to six-layers, and the polypropylene layer 11 is preferably a layer that does not constitute the surface of the adhesive film 1 for metal terminal. Fig. 5 shows a laminated configuration of the adhesive film 1 for metal terminal having a three-layered configuration in which the first layer 12a located on a side of the exterior material 3 for electrical storage devices, the polypropylene layer 11, and the second layer 12b located on a side of the metal terminal 2 are laminated in this order. Furthermore, Fig. 6 shows a laminated configuration of the adhesive film 1 for metal terminal having a four-layered configuration in which the first layer 12a located on the side of the exterior material 3 for electrical storage devices, the polypropylene layer 11, the third layer 12c, and the second layer 12b located on the side of the metal terminal 2 are laminated in this order. Note that, as will be described later, Fig. 7 shows a laminated configuration in which, for the purpose of firmly bonding the polypropylene layer 11 and the first layer 12a, and the polypropylene layer 11 and the second layer 12b, respectively, adhesion promoter layers 13 are provided between these layers.

From a viewpoint of more suitably exerting the effect of the present disclosure, a ratio of a thickness of the polypropylene layer 11 to a thickness of the adhesive film 1 for metal terminal is preferably about 0.20 or more, more preferably about 0.25 or more, and still more preferably about 0.30 or more, and is preferably about 0.90 or less, more preferably about 0.85 or less, and still more preferably about 0.80 or less, and preferable ranges thereof include about 0.20 to 0.90, about 0.20 to 0.85, about 0.20 to 0.80, about 0.25 to 0.90, about 0.25 to 0.85, about 0.25 to 0.80, about 0.30 to 0.90, about 0.30 to 0.85, and about 0.30 to 0.80.

The polypropylene layer 11 is a layer formed of polypropylene. Examples of the polypropylene include crystalline or noncrystalline polypropylene such as homopolypropylene, block copolymers of polypropylene (for example, a block copolymer of propylene and ethylene), and random copolymers of polypropylene (for example, a random copolymer of propylene and ethylene), and terpolymers of ethylene-butene-propylene. Among these polypropylenes, homopolypropylene and block copolymers of polypropylene are preferable. Note that, even in the case of homopolypropylene, a homopolypropylene made only of propylene is usually rare, and ethylene is usually copolymerized. In the present

disclosure, use of homopolypropylene (that is, the island portion ratio of the sea-island structure described above is 20% or less) having a particularly small proportion of ethylene is preferable.

Furthermore, polypropylene of the polypropylene layer 11 may contain modified polypropylene or may be modified polypropylene. Examples of the modified polypropylene include acid-modified polypropylene. The acid-modified propylene is not particularly limited as long as it is acid-modified polypropylene, but polypropylene graft-modified with an unsaturated carboxylic acid or an anhydride thereof is preferable. Specific examples of the acid-modified polypropylene include crystalline or noncrystalline polypropylene such as homopolypropylene, block copolymers of polypropylene (for example, a block copolymer of propylene and ethylene), and random copolymers of polypropylene (for example, a random copolymer of propylene and ethylene), and terpolymers of ethylene-butene-propylene. Among these polypropylenes, homopolypropylene and block copolymers of polypropylene are preferable.

Examples of the carboxylic acid or anhydride thereof which is used for acid modification include maleic acid, acrylic acid, itaconic acid, crotonic acid, maleic anhydride and itaconic anhydride. When the resin layer containing maleic anhydride is analyzed by infrared spectroscopy, a peak derived from maleic anhydride is preferably detected. For example, when a maleic anhydride-modified polyolefin is measured by infrared spectroscopy, peaks derived from maleic anhydride are detected near wavenumbers of 1760 $cm^{-1}$ and 1780 $cm^{-1}$. In a case where the polypropylene layer 11 is a layer including maleic anhydride-modified polypropylene, a peak derived from maleic anhydride is detected as measured by infrared spectroscopy. However, if the degree of acid modification is low, the peaks may be too small to be detected. In that case, the peaks can be analyzed by nuclear magnetic resonance spectroscopy.

The polypropylene layer 11 may be formed of one resin component alone, or may be formed of a blend polymer obtained by combining two or more resin components.

In the present disclosure, the island portion ratio of the sea-island structure of the polypropylene layer 11 may be 20% or less, but from the viewpoint of more suitably exhibiting the effect of the present disclosure, the island portion ratio is preferably about 18% or less, more preferably about 15% or less, still more preferably about 10% or less, still more preferably about 5% or less, still more preferably less than about 5%, still more preferably about 3% or less, still more preferably about 1% or less, and the like, and is preferably about 0% or more, about 0.02% or more, about 0.04% or more, and the like, and preferable ranges thereof include about 0 to 20%, about 0 to 18%, about 0 to 15%, about 0 to 10%, about 0 to 5%, about 0% or more and less than 5%, about 0 to 3%, about 0 to 1%, about 0.02 to 20%, about 0.02 to 18%, about 0.02 to 15%, about 0.02 to 10%, about 0.02 to 5%, about 0.02% or more and less than 5%, about 0.02 to 3%, about 0.02 to 1%, about 0.04 to 20%, about 0.04 to 18%, about 0.04 to 15%, about 0.04 to 10%, about 0.04 to 5%, about 0.04% or more and less than 5%, about 0.04 to 3%, and about 0.04 to 1%. The island portion ratio of the sea-island structure of the polypropylene layer 11 can be adjusted, for example, by controlling the content of polyethylene in the polypropylene film, the polymerization type (homo, block, or random), and the film forming conditions (temperature and speed at the time of film formation, cooling temperature and speed, and the like). The island portion ratio of the sea-island structure of the polypropylene layer is a value measured by the following method.

<Measurement of island portion ratio of sea-island structure of polypropylene layer>

An adhesive film is embedded in a thermosetting epoxy resin and cured. Using a commercially available rotary microtome and a diamond knife, a cross-section in a target direction (a cross-section in a direction parallel to TD and in a thickness direction) is prepared, and at that time, the cross-section is prepared at -70°C with a cryomicrotome using liquid nitrogen. After dyeing the whole embedded resin with ruthenium tetroxide for 12 hours, the expanded part is trimmed with a microtome, and the resin is cut by 100 nm to 300 nm in the machine direction, and when the resin is cut by about 1 μm to 2 μm in total, the exposed cross-section of the polypropylene layer is observed as follows. The dyed cross-section is observed with a field emission scanning electron microscope (measurement condition: 3 kV 20 mA High WD 6mm detector (Upper)) to acquire an image (magnification: 10000 times). Next, using image processing software capable of binarizing the image, the island portion and the sea portion of the sea-island structure are binarized for the image, and the ratio of the total area of the island portion (total area of the island portion/area of the measurement range of the image) is obtained.

[Image processing conditions]

Image processing is performed using image analysis software ImageJ. Specifically, the SEM image is acquired as a digital file of a grayscale image (JPEG), processing is performed according to the following binarization processing procedure and parameters, a pixel having a gradation (bright) equal to or greater than a threshold is output as 1, a pixel having a gradation (dark) less than the threshold is output as 0, and each is defined as an island portion and a sea portion.

<Binarization processing>

1. Removal of spike noise(Despeckle)
2. Removal of contour of island portion (Remove Outliers radius=4 threshold=1 which=Bright)
3. Removal of contour of sea portion (Remove Outliers radius=4 threshold=1 which=Dark)
4. Removal of spike noise (Despeckle)
5. Gaussian blur in X-axis (short side of sample) direction (Threshold = 3 pixels)
6. Contrast enhancement (saturated = 0.2)
7. Removal of contour of island portion (Remove Outliers radius=4 threshold=1 which=Bright)
8. Removal of contour of sea portion (Remove Outliers radius=4 threshold=1 which=Dark)
9. Otsu's binarization

From the viewpoint of more suitably exhibiting the effect of the present disclosure, in the adhesive film 1 for metal terminal, the ratio of the soft segment component measured by a Solid Echo method using pulsed NMR in an environment at a temperature of 40°C after heating the adhesive film 1 for metal terminal under conditions of a temperature of 200°C and a surface pressure of 0.25 MPa for 16 seconds is preferably about 20% or less, more preferably about 18% or less, and still more preferably about 16% or less, and is preferably about 3% or more, more preferably about 8% or more, and still more preferably about 10% or more, and examples of the preferable range thereof include about 3 to 20%, about 3 to 18%, about 3 to 16%, about 8 to 20%, about 8 to 18%, about 8 to 16%, about 10 to 20%, about 10 to 18%, and about 10 to 16%. The ratio of the soft segment component after heating of the adhesive film 1 can be adjusted, for example, by controlling the content of polyethylene in the polypropylene film, the polymerization type (homo, block, or random), and the film-forming conditions (temperature and speed at the time of film formation, cooling temperature and speed, and the like). The method for measuring the ratio of the soft segment component after heating of the adhesive film for metal terminal is as follows.

<Measurement of ratio of soft segment component after heating of adhesive film>

The adhesive film is heated at a temperature of 200°C and a surface pressure of 0.25 MPa for 16 seconds to obtain a sample. This heating treatment is heating assuming physical properties after the adhesive film is disposed between the exterior material for electrical storage devices and the metal terminal and heat-sealed. A sample is introduced into a glass sample tube having a diameter of 10 mm, the sample tube is placed in a pulsed NMR device and held at 440°C for 5 minutes, and then a free induced decay curve of the spin-spin relaxation of 1H is obtained by the Solid Echo method at 40°C. The number of scans in the Solid Echo method was set to 64 times. The obtained decay curve is waveform separated into three curves derived from three components of a hard segment component, an intermediate segment component, and a soft segment component. Waveform separation is obtained by fitting the hard segment component as a function of a Gaussian type and the intermediate segment component and the soft segment component as a function using analysis software "TD-NMRA (Version 4.3 Rev 0.8)" manufactured by BRUKER Corporation. For the analysis, measurement points up to 0.6 msec of the transition curve are used. The following formula is used for fitting.

$$Y = A_1 \times \exp(-(t/\tau_1)^{w1}) + A_2 \times \exp(-(t/\tau_2)^{w2}) + A_3 \times \exp(-(t/\tau_3)^{w3})$$

Here, w1 to w3 are Weibull coefficients, w1 takes a value of 2, and w2 and w3 take values of 1. $A_1$ represents a component ratio of the hard segment component, $A_2$ represents a component ratio of the intermediate segment component, $A_3$ represents a component ratio of the soft segment component, $\tau_1$ represents a component ratio of the hard segment component, $\tau_2$ represents a component ratio of the intermediate segment component, and $\tau_3$ represents a relaxation time of the soft segment component. t is time. As the component ratios $A_1$, $A_2$, and $A_3$, an average value obtained by performing measurement at the same level three times was adopted.

The polypropylene layer 11 may contain a known additive as necessary.

For example, the polypropylene layer 11 may contain a filler as necessary. When the polypropylene layer 11 contains a filler, the filler functions as a spacer, so that a short circuit between the metal terminal 2 and the barrier layer 33 of the exterior material 3 for electrical storage devices can be effectively suppressed. The particle size of the filler is in the range of about 0.1 to 35 μm, preferably about 5.0 to 30 μm, more preferably about 10 to 25 μm. Furthermore, the content of the filler is about 5 to 30 parts by mass, and more preferably about 10 to 20 parts by mass with respect to 100 parts by mass of the resin component forming the polypropylene layer 11.

As the filler, either an inorganic filler or an organic filler can be used. Examples of the inorganic filler include carbon (carbon, graphite), silica, aluminum oxide, barium titanate, iron oxide, silicon carbide, zirconium oxide, zirconium silicate, magnesium oxide, titanium oxide, calcium aluminate, calcium hydroxide, aluminum hydroxide, magnesium hydroxide and calcium carbonate. In addition, examples of the organic filler include fluororesins, phenol resins, urea resins, epoxy resins, acrylic resins, benzoguanamine-formaldehyde condensates, melamine-formaldehyde condensates, crosslinked products of polymethyl methacrylate, and crosslinked products of polyethylene. From the viewpoint of shape stability, rigidity and content resistance, aluminum oxide, silica, fluororesins, acrylic resins and benzoguanamine-formaldehyde condensates are preferable, and among them, spherical aluminum oxide and silica are more preferable. As a method for mixing the filler with the resin component forming the polypropylene layer 11, a method in which both are melt-blended in advance with a Banbury mixer or the like to form a masterbatch and the masterbatch is adjusted to a predetermined mixing ratio, a direct mixing method with the resin component, or the like can be adopted.

Furthermore, the polypropylene layer 11 may contain a colorant such as a pigment as necessary. The colorant is not particularly limited, and a colorant capable of coloring the resin layer can be suitably used. Specific examples of the colorant include a pigment. As the pigment, various inorganic or organic pigments can be used. Furthermore, specific examples of the pigment may preferably include carbon (graphite), silica, titanium oxide, iron oxide, zinc oxide, magnesium oxide, calcium oxide, inorganic oxides such as titanium nitride, zirconia black, copper oxide, cobalt oxide, and barium sulfate, and organic pigments such as quinacridone-based pigments, polyazo-based pigments, and isoindolinone-based pigments. Carbon (carbon, graphite) is a material generally used inside an electrical storage device, and there is no possibility of being dissolved in an electrolytic solution. In addition, the carbon has a high coloring effect, allows a sufficient coloring effect to be obtained with an addition amount small enough not to hinder bondability, is not melted by heat, and is capable of increasing the apparent melt viscosity of the resin added. Further, it is possible to impart an excellent sealing property between the exterior material for electrical storage devices and the metal terminal by preventing a pressed portion from being thinned during thermal bonding (heat-sealing).

The color of the polypropylene layer 11 is not particularly limited, and can be selected according to the purpose. The polypropylene layer 11 is preferably, for example, black, gray, or white.

In a case where a pigment is added to the polypropylene layer 11, the amount of the pigment to be added is, for example, about 0.05 to 0.3 parts by mass, and preferably about 0.1 to 0.2 parts by mass with respect to 100 parts by mass of the resin component forming the polypropylene layer 11 in a case where carbon black having a particle size of about 0.03 μm is used. By adding a pigment to the polypropylene layer 11, the presence or absence of the adhesive film 1 for metal terminal can be detected by a sensor, or can be visually inspected. Note that, in a case where the filler and the pigment described above are added to the polypropylene layer 11, the filler and the pigment may be added to the same polypropylene layer 11, but from the viewpoint of not inhibiting the heat-sealability of the adhesive film 1 for metal terminal, the filler and the pigment are preferably added in a plurality of layers.

In a case where a pigment is added to the polypropylene layer 11, the amount of the pigment to be added is, for example, about 0.05 to 0.3 parts by mass, and preferably about 0.1 to 0.2 parts by mass with respect to 100 parts by mass of the resin component forming the polypropylene layer 11 in a case where carbon black having a particle size of about 0.03 μm is used. By adding a pigment to the polypropylene layer 11, the presence or absence of the adhesive film 1 for metal terminal can be detected by a sensor, or can be visually inspected. Note that, in a case where a filler and a pigment are added to the polypropylene layer 11, the filler and the pigment may be added to the same polypropylene layer 11, but from the viewpoint of not inhibiting the heat-sealability of the adhesive film 1 for metal terminal, it is preferable to add the filler and the pigment separately in different layers (for example, the first layer 12a, the second layer 12b, the third layer 12c, the fourth layer 12d, the polypropylene layer 11, and the like which will be described later).

From the viewpoint of more suitably exhibiting the effect of the present disclosure, a melting peak temperature of the polypropylene layer 11 is preferably about 140°C or higher, more preferably about 145°C or higher, and still more preferably about 150°C or higher. From the same viewpoint, the melting peak temperature is, for example, 180°C or lower, preferably 175°C or lower, more preferably 170°C or lower, and still more preferably about 165°C or lower. Preferable ranges of the melting peak temperature include about 140 to 180°C, about 140 to 175°C, about 140 to 170°C, about 140 to 165°C, about 145 to 180°C, about 145 to 175°C, about 145 to 170°C, about 145 to 165°C, about 150 to 180°C, about 150 to 175°C, about 150 to 170°C, and about 150 to 165°C. In the present disclosure, a method for measuring the melting peak temperature is as follows.

<Measurement of melting peak temperature>

The melting peak temperature of the adhesive film is measured in accordance with the provisions of JIS K7121:2012 (Testing Methods for Transition Temperatures of Plastics (Supplement 1 of JIS K7121: 1987)). The measurement is performed using a differential scanning calorimeter. The measurement sample is held at -50°C for 15 minutes, then heated from -50°C to 210°C at a temperature rise rate of 10°C/min to measure the first melting peak temperature P (°C), and then held at 210°C for 10 minutes. Next, the measurement sample is cooled from 210°C to -50°C at a temperature lowering rate of 10°C/min, and held for 15 minutes. Further, the second melting peak temperature Q (°C) is measured by heating the measurement sample from -50°C to 210°C at a temperature rise rate of 10°C/min. The flow rate of the nitrogen gas is set to 50 ml/min. In accordance with the above procedure, the first measured melting peak temperature P (°C) and the second measured melting peak temperature Q (°C) are determined. In accordance with the above procedure, the value of the first measured melting peak temperature P (°C) is adopted.

In a case where the adhesive film 1 for metal terminal of the present disclosure includes a single layer of the polypropylene layer 11, a total thickness of the adhesive film 1 for metal terminal to be described later corresponds to a thickness of the polypropylene layer 11.

Furthermore, in a case where the adhesive film 1 for metal terminal of the present disclosure includes multiple layers, from the viewpoint of more suitably exhibiting the effect of the present disclosure, the thickness of the polypropylene layer 11 is preferably about 10 μm or more, more preferably about 15 μm or more, and still more preferably about 20 μm or more, and is preferably about 120 μm or less, more preferably about 100 μm or less, and still more preferably 80 μm or less. Preferable ranges of the thickness of the polypropylene layer 11 include about 10 to 120 μm, about 10 to 100 μm, about 10 to 80 μm, about 15 to 120 μm, about 15 to 100 μm, about 15 to 80 μm, about 20 to 120 μm, about 20 to 100 μm, and about 20 to 80 μm. From the viewpoint of enhancing the insulation quality of the adhesive film for metal terminal, the thickness of the polypropylene layer 11 is preferably about 55 μm or more, and more preferably about 60 μm or more, and is preferably about 100 μm or less, and more preferably about 90 μm or less, and preferable ranges thereof include about 55 to 100 μm, about 55 to 90 μm, about 60 to 100 μm, and about 60 to 90 μm. Note that, in a case where the adhesive film 1 for metal terminal of the present disclosure includes a plurality of the polypropylene layers 11, the thickness of each polypropylene layer 11 is preferably the above thickness.

As described above, the adhesive film 1 for metal terminal of the present disclosure can have a configuration in which at least the first layer 12a, the polypropylene layer 11, and the second layer 12b are laminated in this order, for example, as shown in Figs. 5 to 7. In this configuration, the first layer 12a is disposed on the side of the exterior member 3 for an electrical storage device, and the second layer 12b is disposed on the side of the metal terminal 2. The polypropylene layer 11 is disposed between the first layer 12a and the second layer 12b, and can constitute an intermediate layer. In the laminated configurations of Figs. 5 to 7, the first layer 12a and the second layer 12b are located on the surfaces on both sides, respectively. Furthermore, in the laminated configuration of Fig. 6, the third layer 12c is provided between the polypropylene layer 11 and the second layer 12b. Although not illustrated, the fourth layer 12d may be provided between the first layer 12a and the polypropylene layer 11. In a case where the adhesive film 1 for metal terminal of the present disclosure includes multiple layers, the adhesive film 1 for metal terminal preferably includes three to six-layers, and preferably includes at least the first layer 12a constituting a surface on a side of the exterior material 3 for electrical storage devices, the second layer 12b constituting a surface on a side of the metal terminal 2, and the polypropylene layer 11 located between the first layer 12a and the second layer 12b.

When the adhesive film 1 for metal terminal according to the present disclosure is disposed between the metal terminal 2 of the electrical storage device 10 and the exterior material 3 for electrical storage devices, the surface of the metal terminal 2 composed of metal and the heat-sealable resin layer 35 (a layer formed of a heat-sealable resin such as a polyolefin) of the exterior material 3 for electrical storage devices are bonded to each other with the adhesive film 1 for metal terminal interposed therebetween. The first layer 12a of the adhesive film 1 for metal terminal is disposed on the side of the exterior material 3 for electrical storage devices, the second layer 12b is disposed on the side of the metal terminal 2, the first layer 12a is in close contact with the heat-sealable resin layer 35 of the exterior material 3 for electrical storage devices, and the second layer 12b is in close contact with the metal terminal 2. The first layer 12a may be a single layer or a multiple layer. Furthermore, the second layer 12b may be a single layer or a multiple layer.

Each of the first layer 12a, the second layer 12b, the third layer 12c, the fourth layer 12d, and the like that can be included in the adhesive film 1 for metal terminal can be formed of, for example, a resin film. In a case where the first layer 12a, the second layer 12b, the third layer 12c, the fourth layer 12d, and the like are each formed of a resin film, when the adhesive film 1 for metal terminal of the present disclosure is manufactured by laminating the first layer 12a, the second layer 12b, the third layer 12c, the fourth layer 12d, and the like with the polypropylene layer 11 and the like, preformed resin films may be used as the first layer 12a, the second layer 12b, the third layer 12c, the fourth layer 12d, and the like, respectively. Furthermore, resins for forming the first layer 12a, the second layer 12b, the third layer 12c, the fourth layer 12d, and the like may be formed into films on the surface of the polypropylene layer 11 or the like by extrusion molding, coating, or the like to form the first layer 12a, the second layer 12b, the third layer 12c, the fourth layer 12d, and the like formed of resin films.

Each of the first layer 12a, the second layer 12b, the third layer 12c, the fourth layer 12d, and the like that can be included in the adhesive film 1 for metal terminal can be made of a resin. Examples of the resin constituting the first layer 12a, the second layer 12b, the third layer 12c, the fourth layer 12d, and the like include polyolefin-based resins, polyamide-based resins, polyester-based resins, epoxy resins, acrylic resins, fluororesins, silicone resins, phenol resins, polyetherimides, polyimides, polycarbonates, and mixtures and copolymers thereof, and among these, polyolefin-based resins are particularly preferable. Examples of the polyolefin-based resin include polyolefins and acid-modified polyolefins. Specific examples of the polyolefin include polyethylene such as low-density polyethylene, medium-density polyethylene, high-density polyethylene and linear low-density polyethylene; crystalline or noncrystalline polypropylene such as homopolypropylene, block copolymers of polypropylene (e.g., block copolymers of propylene and ethylene) and random copolymers of polypropylene (e.g., random copolymers of propylene and ethylene); terpolymers of ethylene-butene-propylene; and the like. Among these polyolefins, polyethylenes and polypropylene are preferred, with polypropylene

being more preferred. The resin that forms the surface layer of the adhesive film 1 for metal terminal is preferably random polypropylene from the viewpoint of reducing the amount of heat required at the time of heat-sealing and shortening the heat-sealing time (from the viewpoint of seal adhesion).

The first layer 12a disposed on the side of the exterior material 3 for electrical storage devices more preferably contains polyolefin as a main component, and still more preferably contains polypropylene as a main component. Here, the main component means a resin component having a content of, for example, 50 mass% or more, preferably 60 mass% or more, more preferably 70 mass% or more, still more preferably 80 mass% or more, still more preferably 90 mass% or more, still more preferably 95 mass% or more, still more preferably 98 mass% or more, and still more preferably 99 mass% or more among the resin components contained in first layer 12a. For example, the first layer 12a containing polypropylene as a main component means that the content of polypropylene among the resin components contained in the first layer 12a is, for example, 50 mass% or more, preferably 60 mass% or more, more preferably 70 mass% or more, still more preferably 80 mass% or more, still more preferably 90 mass% or more, still more preferably 95 mass% or more, still more preferably 98 mass% or more, and still more preferably 99 mass% or more.

Furthermore, the second layer 12b disposed on the side of the metal terminal 2 more preferably contains an acid-modified polyolefin as a main component, and still more preferably contains an acid-modified polypropylene as a main component. Here, the main component means a resin component having a content of, for example, 50 mass% or more, preferably 60 mass% or more, more preferably 70 mass% or more, still more preferably 80 mass% or more, still more preferably 90 mass% or more, still more preferably 95 mass% or more, still more preferably 98 mass% or more, and still more preferably 99 mass% or more among the resin components contained in the second layer 12b. For example, containing acid-modified polypropylene as a main component in second layer 12b means that the content of acid-modified polypropylene among the resin components contained in second layer 12b is, for example, 50 mass% or more, preferably 60 mass% or more, more preferably 70 mass% or more, still more preferably 80 mass% or more, still more preferably 90 mass% or more, still more preferably 95 mass% or more, still more preferably 98 mass% or more, and still more preferably 99 mass% or more.

The melting peak temperatures of the first layer 12a, the second layer 12b, the third layer 12c, the fourth layer 12d, and the like are preferably 125°C or higher, more preferably about 130°C or higher, and still more preferably about 135°C or higher, respectively. The melting peak temperature is, for example, 180°C or lower, preferably 175°C or lower, more preferably 170°C or lower, still more preferably about 165°C or lower, still more preferably about 160°C or lower. The melting peak temperature is preferably in the range of about 125 to 180°C, about 125 to 175°C, about 125 to 170°C, about 125 to 165°C, about 125 to 160°C, about 130 to 180°C, about 130 to 175°C, about 130 to 170°C, about 130 to 165°C, about 130 to 160°C, about 135 to 180°C, about 135 to 175°C, about 135 to 170°C, about 135 to 165°C, or about 135 to 160°C.

Furthermore, each of the thicknesses of the first layer 12a, the second layer 12b, the third layer 12c, the fourth layer 12d, and the like is preferably about 10 μm or more, more preferably about 15 μm or more, and still more preferably about 20 μm or more, and is preferably about 120 μm or less, more preferably about 100 μm or less, and still more preferably 80 μm or less. Preferable ranges of the thicknesses of the first layer 12a, the second layer 12b, the third layer 12c, the fourth layer 12d, and the like include about 10 to 120 μm, about 10 to 100 μm, about 10 to 80 μm, about 15 to 120 μm, about 15 to 100 μm, about 15 to 80 μm, about 20 to 120 μm, about 20 to 100 μm, and about 20 to 80 μm.

Note that, like the polypropylene layer 11, the first layer 12a, the second layer 12b, the third layer 12c, the fourth layer 12d, and the like may contain known additives (the above-mentioned fillers, pigments, and the like). The type and addition amount of the filler and pigment are the same as those of the polypropylene layer 11.

From the viewpoint of more suitably exhibiting the effect of the present disclosure, the total thickness of the adhesive film 1 for metal terminal is, for example, about 50 μm or more, preferably about 80 μm or more, more preferably about 90 μm or more, and still more preferably about 100 μm or more. In addition, the total thickness of the adhesive film 1 for metal terminal according to the present disclosure is about 500 μm or less, preferably about 300 μm or less, more preferably about 250 μm or less, still more preferably 200 μm or less. Preferable ranges of the total thickness of the adhesive film 1 for metal terminal of the present disclosure include about 50 to 500 μm, about 50 to 300 μm, about 50 to 250 μm, about 50 to 200 μm, about 80 to 500 μm, about 80 to 300 μm, about 80 to 250 μm, about 80 to 200 μm, about 90 to 500 μm, about 90 to 300 μm, about 90 to 250 μm, about 90 to 200 μm, about 100 to 500 μm, about 100 to 300 μm, about 100 to 250 μm, and about 100 to 200 μm. As a more specific example, for example, the adhesive film 1 for metal terminal according to the present disclosure preferably has a total thickness of about 60 to 100 μm in a case of being used for relatively small electrical storage devices for mobile phones, smartphones or tablets, and preferably has a total thickness of about 100 to 250 μm in a case of being used for large electrical storage devices for electrical power storage systems or in-vehicle uses.

Furthermore, from the viewpoint of more suitably exhibiting the effect of the present disclosure, the heat of fusion measured after heating the adhesive film 1 for metal terminal of the present disclosure under the conditions of a temperature of 200°C and a surface pressure of 0.25 MPa for 16 seconds is preferably about 50 J/g or more, more preferably about 55 J/g or more, still more preferably about 60 J/g or more, and still more preferably 65 J/g or more, and is preferably about 100 J/g or less, more preferably about 90 J/g or less, and still more preferably about 80 J/g or less, and

preferable ranges thereof include about 50 to 100 J/g, about 50 to 90 J/g, about 50 to 80 J/g, about 55 to 100 J/g, about 55 to 90 J/g, about 55 to 80 J/g, about 60 to 100 J/g, about 60 to 90 J/g, about 60 to 80 J/g, about 65 to 100 J/g, about 65 to 90 J/g, and about 65 to 80 J/g. The heat of fusion of the adhesive film after heating can be adjusted by controlling the content of polyethylene in the polypropylene film constituting the polypropylene layer 11, the polymerization type (homo, block, or random), and the film-forming conditions (temperature and speed at the time of film formation, cooling temperature and speed, and the like). The method for measuring the heat of fusion of the adhesive film after heating is as follows.

<Measurement of heat of fusion after heating of adhesive film>

The adhesive film 1 for metal terminal of the present disclosure is heated at a temperature of 200°C and a surface pressure of 0.25 MPa for 16 seconds. This heating treatment is heating assuming physical properties after the adhesive film is disposed between the exterior material for electrical storage devices and the metal terminal and heat-sealed. Next, the heat of fusion is measured in accordance with the provisions of JIS K 7122:2012. The measurement is performed using a differential scanning calorimeter. The heat-treated adhesive film 1 for metal terminal was held at -50°C for 15 minutes, and then the temperature was raised from -50°C to 210°C at a temperature rise rate of 10°C/min. A first heat of fusion ΔH (J/g) was measured, and then the adhesive film 1 was held at 210°C for 10 minutes. Next, the measurement sample was cooled from 210°C to -50°C at a temperature lowering rate of 10°C/min, and held for 15 minutes. Further, the second heat of fusion ΔH (J/g) is measured by heating the measurement sample from -50°C to 210°C at a temperature rise rate of 10°C/min. The flow rate of the nitrogen gas is set to 50 ml/min. According to the above procedure, the value of the heat of fusion ΔH (J/g) measured at the first time is adopted as the heat of fusion. The heat of fusion is an area of a region surrounded by a base line (a line formed by connecting a start point and an end point of a base-to-base ridge line) and a peak in the DSC curve.

Furthermore, from the viewpoint of more suitably exhibiting the effect of the present disclosure, the water vapor permeability of the adhesive film 1 for metal terminal of the present disclosure is preferably about 5.10 g·mm/($m^2$·day) or less, more preferably about 4.20 g·mm/($m^2$·day) or less, still more preferably about 4.10 g·mm/($m^2$·day) or less, and still more preferably about 4.00 g·mm/($m^2$·day) or less, and is, for example, about 3.00 g·mm/($m^2$·day) or more, and about 0 g·mm/($m^2$·day) or more, and preferable ranges thereof include about 0 to 5.10 g·mm/($m^2$·day), about 0 to 4.20 g·mm/($m^2$·day), about 0 to 4.10 g·mm/($m^2$·day), about 0 to 4.00 g·mm/($m^2$·day), about 3.0 to 5.10 g·mm/($m^2$·day), about 3.00 to 4.20 g·mm/($m^2$·day), about 3.00 to 4.10 g·mm/($m^2$·day), and about 3.00 to 4.00 g·mm/($m^2$·day). The method for measuring the water vapor permeability of the adhesive film is as follows.

<Measurement of water vapor permeability of adhesive film>

First, an exterior material for electrical storage devices (hereinafter, it may be simply referred to as "exterior material") is prepared by the following procedure. For example, a biaxially stretched polyethylene terephthalate (PET) film (thickness: 12 μm) and a stretched nylon (ONy) film (thickness: 15 μm) were prepared as base material layers. The PET film and the ONy film were bonded with a two-liquid urethane adhesive (polyol compound and aromatic isocyanate-based compound), and aging treatment was performed to obtain a base material layer (thickness: 30 μm) in which a PET film (thickness: 12 μm), an adhesive agent layer (thickness after curing: 3 μm) and an ONy film (thickness: 15 μm) were laminated in this order from the outside. In addition, an aluminum foil (JIS H4160:1994 A8021 H-O (thickness: 40 μm)) was prepared as a barrier layer. Next, the surface of the base material layer on the ONy film side and the barrier layer are bonded to each other using a two-liquid urethane adhesive (polyol compound and aromatic isocyanate-based compound), and an aging treatment is performed to obtain a pseudo exterior material for electrical storage devices (total thickness: 73 μm) in which a laminate of base material layer (thickness: 30 μm)/adhesive agent layer (thickness after curing: 3 μm)/barrier layer (thickness: 40 μm) is laminated in this order and which lacks the inside of the barrier layer.

Next, as shown in the schematic view of Fig. 9, the obtained exterior material 3 is cut into a square having a length (MD) of 120 mm and a width (TD) of 120 mm (Fig. 9a). Furthermore, two sheets obtained by cutting the adhesive film 1 into a rectangle having a length (MD) of 120 mm and a width (TD) of 10 mm and two sheets obtained by cutting the adhesive film 1 into a rectangle having a length (MD) of 100 mm and a width (TD) of 10 mm are prepared. On the barrier layer side of the exterior material 3, adhesive films having the same longitudinal length are disposed to face each other along the periphery of the exterior material 3 (Fig. 9b). At this time, a second layer side of the adhesive film is set to a barrier layer side of the exterior material 3. Next, a polytetrafluoroethylene film (PTFE film, thickness 100 μm) is placed on the adhesive films of the laminate (the surfaces of the adhesive films are covered with a PTFE film), and in a state of silicon sheet/PTFE/the laminate/PTFE/silicone sponge sheet, the polytetrafluoroethylene film is placed on a press machine heated to 200°C, and is left to stand for 16 seconds under the condition of a pressure of 0.25 MPa to heat-seal the adhesive films to the exterior material 3. The laminate after heat-sealing is naturally cooled to 25°C, and the PTFE film is peeled off from the laminate. This heating treatment is heating assuming physical properties after the adhesive film is disposed between the exterior material for electrical storage devices and the metal terminal and heat-sealed. Next, the exterior material 3 is folded in half

in the longitudinal direction so that the adhesive films face inward (Fig. 9c). Two adhesive films for metal terminal having the length (MD) of 120 mm are disposed to overlap each other between the exterior materials 3 along long sides to be heat-sealed described later, and the adhesive films for metal terminal having the length (MD) of 100 mm is disposed to be bent in half between the exterior materials 3 along short sides to be heat-sealed described later. The peripheral portion of the exterior material 3 is a laminate in which an exterior material/an adhesive film/an adhesive film/an exterior material are laminated in this order (Fig. 9c).

Next, using a heat seal bar (stainless steel plate), the respective layers of the laminate are heat-sealed at the positions of the long side and the short side of the laminate to form a bag shape in which one short side is not heat-sealed (Fig. 9c). As conditions for heat-sealing, a heat seal bar having a width of 7 mm is used for the long side, and heat sealing is performed once at a temperature of 190°C and a surface pressure of 0.5 MPa for 1.5 seconds (s1 in Fig. 9c). Furthermore, the short side is heat-sealed once under conditions of a temperature of 190°C, a surface pressure of 0.5 MPa, and 1.5 seconds using a heat seal bar having a width of 7 mm (s2 in Fig. 9c). Dry in a dry room for 1 day. Next, about 3.0 g of a liquid (moisture content: 0%) of ethylene carbonate: diethyl carbonate: dimethyl carbonate = 1 : 1 : 1 (volume ratio) is injected from the position of the short side which is not heat-sealed (Fig. 9d), and the short side which is not heat-sealed is also heat-sealed in the same manner as the short side described above (s3 of Fig. 9e) to form a sealed bag (Fig. 9e). The sealed bag is allowed to stand in an environment of a temperature of 65°C and a relative humidity of 90% for 30 days, and then the moisture content of the liquid taken out from the sealed bag is measured by the Karl Fischer method in a dry room to obtain contained moisture (ppm). The water vapor permeability (g·mm/($m^2$·day)) is determined by calculating from the amount (g) of the electrolytic solution charged from the obtained contained moisture, the permeation distance (mm), the permeation cross-sectional area ($m^2$), and the number of days of storage (day).

Water vapor permeability (g·mm/($m^2$·day)) = [obtained contained moisture (ppm) × charged electrolytic solution (g) × permeation distance (mm)]/[permeation cross- sectional area ($m^2$) × number of days of storage (day)]

· Obtained contained moisture (ppm): obtained by Karl Fischer's method.
· Input electrolytic solution (g): 3.0 g
· Permeation distance (mm): seal width 7 mm
· Permeation cross-sectional area ($m^2$): residual thickness (μm) × seal inner periphery (mm)
· Number of days of storage (day): 30 days

[Base material]

In the adhesive film 1 for metal terminal, the base material is a layer that functions as a support for the adhesive film 1 for metal terminal, and is provided as necessary. For example, the polypropylene layer 11 may be used as the base material. For example, in the case of the adhesive film 1 for metal terminal having a base material as an intermediate layer, winding of the base material is prepared in advance, and polypropylene or the like is extruded at a predetermined thickness onto a surface of the base material unwound from the winding using an extruder and a T-die casting device, whereby the adhesive film 1 for metal terminal having a multi-layered structure can be manufactured.

The base material may be formed of the polypropylene layer 11 described above, or may be formed of the first layer 12a, the second layer 12b, the third layer 12c, the fourth layer 12d, and the like described above.

The base material can be formed of, for example, a resin film. In a case where the base material is formed of a resin film, a resin film formed in advance may be used as the base material when the adhesive film 1 for metal terminal of the present disclosure is manufactured by laminating the base material with the first layer 12a or the like. Furthermore, a resin for forming the base material may be formed into a film on the surface of the first layer 12a or the like by extrusion molding, coating, or the like to form a base material formed of a resin film.

The material that forms the base material is not particularly limited. Examples of the material forming the base material include polyolefin-based resins, polyamide-based resins, polyester-based resins, epoxy resins, acrylic resins, fluororesins, silicone resins, phenol resins, polyetherimides, polyimides, polycarbonates, and mixtures and copolymers thereof, and among these, polyolefin-based resins are particularly preferable. That is, the material forming the base material is preferably a resin containing a polyolefin backbone such as a polyolefin or an acid-modified polyolefin. Whether the resin constituting the base material contains a polyolefin backbone can be analyzed by, for example, infrared spectroscopy, gas chromatography mass spectrometry, or the like.

The base material preferably contains a polyolefin-based resin, preferably contains polyolefin, and more preferably is a layer formed of polyolefin. The layer formed of polyolefin may be a stretched polyolefin film or an unstretched polyolefin film, and is preferably an unstretched polyolefin film. Specific examples of the polyolefin include polyethylene such as low-density polyethylene, medium-density polyethylene, high-density polyethylene and linear low-density polyethylene; crystalline or noncrystalline polypropylene such as homopolypropylene, block copolymers of polypropylene (e.g., block copolymers of propylene and ethylene) and random copolymers of polypropylene (e.g., random copolymers of propylene and ethylene); terpolymers of ethylene-butene-propylene; and the like. Among these polyolefins, polyethylenes and polypropylene are preferred, with polypropylene being more preferred. Furthermore, from the viewpoint of excellent electrolytic solution resistance, the base material preferably contains homopolypropylene, more preferably is formed of homopolypropylene, and still more preferably is an unstretched homopolypropylene film.

Specific examples of the polyamide include aliphatic polyamides such as nylon 6, nylon 66, nylon 610, nylon 12, nylon 46, and copolymers of nylon 6 and nylon 66; hexamethylenediamine-isophthalic acid-terephthalic acid copolymerization polyamides containing a structural unit derived from terephthalic acid and/or isophthalic acid, such as nylon 6I, nylon 6T, nylon 6IT and nylon 6I6T (I denotes isophthalic acid and T denotes terephthalic acid), and polyamides containing aromatics, such as polymethaxylylene adipamide (MXD6); cycloaliphatic polyamides such as polyaminomethyl cyclohexyl adipamide (PACM 6); polyamides copolymerized with a lactam component or an isocyanate component such as 4,4'-diphenylmethane-diisocyanate, and polyester amide copolymers and polyether ester amide copolymers as copolymers of a copolymerization polyamide and a polyester or a polyalkylene ether glycol; and copolymers thereof. These polyamides may be used alone, or may be used in combination of two or more thereof.

Specific examples of the polyester include polyethylene terephthalate, polybutylene terephthalate, polyethylene naphthalate, polybutylene naphthalate, polyethylene isophthalate, copolymerization polyesters with ethylene terephthalate as a main repeating unit, and copolymerization polyesters with a butylene terephthalate as a main repeating unit. Specific examples of the copolymerization polyester including ethylene terephthalate as a main repeating unit include copolymer polyesters that are polymerized with ethylene isophthalate and include ethylene terephthalate as a main repeating unit (hereinafter, abbreviated as follows after polyethylene(terephthalate/isophthalate)), polyethylene(terephthalate/isophthalate), polyethylene(terephthalate/adipate), polyethylene(terephthalate/sodium sulfoisophthalate), polyethylene(terephthalate/sodium isophthalate), polyethylene (terephthalate/phenyl-dicarboxylate) and polyethylene(terephthalate/decane dicarboxylate). Specific examples of the copolymerization polyester with butylene terephthalate as a main repeating unit include copolymer polyesters that are polymerized with butylene isophthalate and include butylene terephthalate as a main repeating unit (hereinafter, abbreviated as follows after polybutylene(terephthalate/isophthalate)), polybutylene(terephthalate/adipate), polybutylene(terephthalate/sebacate), polybutylene(terephthalate/decane dicarboxylate) and polybutylene naphthalate. These polyesters may be used alone, or may be used in combination of two or more thereof.

Furthermore, the base material may be formed of a nonwoven fabric formed of the resin described above. In a case where the base material is a nonwoven fabric, the base material preferably includes the above-described polyolefin-based resin, polyamide resin, and the like.

The melting peak temperature of the base material is preferably 120°C or higher, more preferably about 130°C or higher, and still more preferably about 140°C or higher. From the same viewpoint, the melting peak temperature is, for example, 210°C or lower, preferably 200°C or lower, more preferably 190°C or lower, still more preferably about 180°C or lower, still more preferably about 170°C or lower. The melting peak temperature is preferably in the range of about 120 to 210°C, about 120 to 200°C, about 120 to 190°C, about 120 to 180°C, about 120 to 170°C, about 130 to 210°C, about 130 to 200°C, about 130 to 190°C, about 130 to 180°C, about 130 to 170°C, about 140 to 210°C, about 140 to 200°C, about 140 to 190°C, about 140 to 180°C, or about 140 to 170°C.

The base material may be a single layer, or may be a multiple layer.

Furthermore, the base material can also be a layer containing a colorant by blending the colorant into the base material. In addition, the light transmittance can be adjusted by selecting a resin having low transparency. In a case where the base material is a film, a colored film or a film having low transparency can also be used. Furthermore, in a case where the base material is a nonwoven fabric, it is possible to use a nonwoven fabric using fibers or a binder containing a colorant, or a nonwoven fabric having low transparency.

In a case where the base material includes a resin film, a surface of the base material may be subjected to a known easy adhesion means such as a corona discharge treatment, an ozone treatment, or a plasma treatment as necessary.

Furthermore, from the viewpoint of more suitably exhibiting the effect of the present disclosure, the thickness of the base material is preferably about 20 μm or more, more preferably about 30 μm or more, and still more preferably about 40 μm or more, and is preferably about 120 μm or less, more preferably about 110 μm or less, and still more preferably 100 μm or less. Preferable ranges of the thickness of the base material include about 20 to 120 μm, about 20 to 110 μm, about 20 to 100 μm, about 30 to 120 μm, about 30 to 110 μm, about 30 to 100 μm, about 40 to 120 μm, about 40 to 110 μm, and about 40 to 100 μm.

[Adhesion promotor layer 13]

The adhesion promoter layer 13 is, for example, a layer provided as necessary for the purpose of firmly bonding

the polypropylene layer 11 and the first layer 12a, and the polypropylene layer 11 and the second layer 12b (see Fig. 7). The adhesion promoter layer 13 may be provided between the polypropylene layer 11 and the first layer 12a and/or between the polypropylene layer 11 and the second layer 12b.

The adhesion promoter layer 13 can be formed using a known adhesion promoter such as an isocyanate-based adhesion promoter, a polyethyleneimine-based adhesion promoter, a polyester-based adhesion promoter, a polyurethane-based adhesion promoter or a polybutadiene-based adhesion promoter. From the viewpoint of obtaining high adhesion strength, it is preferable that the adhesion promoter layer is formed of an isocyanate-based adhesion promoter, among the above-mentioned adhesion promoters. As the isocyanate-based adhesion promoter, one composed of an isocyanate component selected from a triisocyanate monomer and polymeric MDI is excellent in lamination strength and undergoes little decrease in lamination strength at a high temperature. In particular, it is particularly preferable to form the adhesion promoter layer from an adhesion promoter composed of triphenylmethane-4,4',4"-triisocyanate which is a triisocyanate monomer or polymethylene polyphenyl polyisocyanate which is polymeric MDI (NCO content: about 30% and viscosity: 200 to 700 mPa·s). In addition, it is also preferable to form the adhesion promoter layer from tris(p-isocyanatephenyl)thiophosphate which is a triisocyanate monomer, or a two-liquid curable adhesion promoter contain a polyethyleneimine-based resin as a main component and polycarbodiimide as a crosslinking agent.

The adhesion promoter layer 13 can be formed by performing coating by a known coating method such as a bar coating method, a roll coating method or a gravure coating method, and drying. The coating amount of the adhesion promoter is about 20 to 100 mg/m$^2$, preferably about 40 to 60 mg/m$^2$ in the case of an adhesion promoter composed of triisocyanate, about 40 to 150 mg/m$^2$, preferably about 60 to 100 mg/m$^2$ in the case of an adhesion promoter composed of polymeric MDI, and about 5 to 50 mg/m$^2$, preferably about 10 to 30 mg/m$^2$ in the case of a two-liquid curable adhesion promoter containing polyethyleneimine as a main component and polycarbodiimide as a crosslinking agent. The triisocyanate monomer is a monomer having three isocyanate groups per molecule, and the polymeric MDI is a mixture of MDI and a MDI oligomer obtained by polymerizing MDI, and is represented by the following formula.

[Chemical Formula 1]

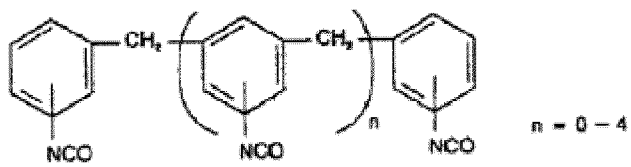

From the viewpoint of more suitably exhibiting the effect of the present invention, it is preferable that the first layer 12a and the polypropylene layer 11 are in contact with each other, and the second layer 12b and the polypropylene layer 11 are in contact with each other.

Specific examples of a preferred laminated configuration of the adhesive film 1 for metal terminal of the present disclosure include a three-layered configuration in which a first layer 12a formed of polypropylene, a polypropylene layer 11 formed of polypropylene, and a second layer 12b formed of acid-modified polypropylene are laminated in this order, a three-layered configuration in which a first layer 12a formed of acid-modified polypropylene, a polypropylene layer 11 formed of polypropylene, and a second layer 12b formed of acid-modified polypropylene are laminated in this order, a four-layered configuration in which a first layer 12a formed of polypropylene, a polypropylene layer 11 formed of polypropylene, a third layer 12c formed of polypropylene, and a second layer 12b formed of acid-modified polypropylene are laminated in this order, and a four-layered configuration in which a first layer 12a formed of acid-modified polypropylene, a polypropylene layer 11 formed of polypropylene, a third layer 12c formed of polypropylene, and a second layer 12b formed of acid-modified polypropylene are laminated in this order.

It is preferable that the adhesive film 1 for metal terminal according to the present disclosure is formed of a polyolefin-based resin. For example, the resin component contained in the adhesive film 1 for metal terminal of the present disclosure is preferably only the polyolefin-based resin, more preferably only the acid-modified polyolefin and the polyolefin, and still more preferably only the acid-modified polypropylene and the polypropylene. Preferred acid-modified polyolefins and polyolefins are as described above.

The method for interposing the adhesive film 1 for metal terminal between the metal terminal 2 and the exterior material 3 for electrical storage devices is not particularly limited, and for example, as shown in Figs. 1 to 3, the adhesive film 1 for metal terminal may be wound around the metal terminal 2 at a portion where the metal terminal 2 is sandwiched between the exterior materials 3 for electrical storage devices. In addition, the adhesive film 1 for metal terminal may be disposed on both sides of the metal terminal 2 so as to cross the two metal terminals 2 in a portion where the metal terminal 2 is sandwiched between the exterior materials 3 for electrical storage devices.

[Metal terminal 2]

The adhesive film 1 for metal terminal according to the present disclosure is interposed between the metal terminal 2 and the exterior material 3 for electrical storage devices. The metal terminal 2 (tab) is a conductive member electrically connected to an electrode (positive electrode or negative electrode) of the electrical storage device element 4, and is composed of a metal material. The metal material that forms the metal terminal 2 is not particularly limited, and examples thereof include aluminum, nickel, and copper. For example, the metal terminal 2 connected to a positive electrode of a lithium ion electrical storage device is typically composed of aluminum or the like. In addition, the metal terminal 2 connected to a negative electrode of a lithium ion electrical storage device is typically composed of copper, nickel or the like.

From the viewpoint of enhancing electrolytic solution resistance, it is preferable that the surface of the metal terminal 2 is subjected to chemical conversion treatment. For example, when the metal terminal 2 is formed of aluminum, specific examples of the chemical conversion treatment include a known method in which a corrosion-resistant film of a phosphate, a chromate, a fluoride, a triazinethiol compound or the like. Among the methods for forming a corrosion-resistant film, phosphoric acid chromate treatment using a material including three components: a phenol resin, a chromium (III) fluoride compound and phosphoric acid is preferred.

The size of the metal terminal 2 may be appropriately set according to the size of an electrical storage device used. The thickness of the metal terminal 2 is preferably about 50 to 1000 μm, more preferably about 70 to 800 μm. In addition, the length of the metal terminal 2 is preferably about 1 to 200 mm, more preferably about 3 to 150 mm. In addition, the width of the metal terminal 2 is preferably about 1 to 200 mm, more preferably about 3 to 150 mm.

[Exterior material 3 for electrical storage devices]

Examples of the exterior material 3 for electrical storage devices include materials having a laminated structure including a laminate having at least a base material layer 31, a barrier layer 33, and a heat-sealable resin layer 35 in the stated order. Fig. 8 shows an aspect in which the base material layer 31, an adhesive agent layer 32 provided if necessary, the barrier layer 33, an adhesive layer 34 provided if necessary, and the heat-sealable resin layer 35 are laminated in the stated order as an example of a cross-sectional structure of the exterior material 3 for electrical storage devices. In the exterior material 3 for electrical storage devices, the base material layer 31 is on the outer layer side, and the heat-sealable resin layer 35 is an innermost layer. During construction of an electrical storage device, the heat-sealable resin layers 35 located on the peripheral edge of the electrical storage device element 4 is brought into contact with each other, and heat-welded to seal the electrical storage device element 4, so that the electrical storage device element 4 is sealed. Figs. 1 to 3 show the electrical storage device 10 where the embossed-type exterior material 3 for electrical storage devices, which is molded by embossing molding, is used, but the exterior material 3 for electrical storage devices may be of non-molded pouch type. Examples of the pouch type include three-way seal, four-way seal and pillow type, and any of the types may be used.

The thickness of the laminate forming the exterior material 3 for electrical storage devices is not particularly limited, but is preferably about 190 μm or less, about 180 μm or less, about 160 μm or less, about 155 μm or less, about 140 μm or less, about 130 μm or less, or about 120 μm or less from the viewpoint of cost reduction, improvement of the energy density and the like, and preferably about 35 μm or more, about 45 μm or more, about 60 μm or more, or about 80 μm or more from the viewpoint of maintaining the function of the exterior material 3 for electrical storage devices, which is protection of the electrical storage device element 4. For example, the thickness is preferably in the range of about 35 to 190 μm, about 35 to 180 μm, about 35 to 160 μm, about 35 to 155 μm, about 35 to 140 μm, about 35 to 130 μm, about 35 to 120 μm, about 45 to 190 μm, about 45 to 180 μm, about 45 to 160 μm, about 45 to 155 μm, about 45 to 140 μm, about 45 to 130 μm, about 45 to 120 μm, about 60 to 190 μm, about 60 to 180 μm, about 60 to 160 μm, about 60 to 155 μm, about 60 to 140 μm, about 60 to 130 μm, about 60 to 120 μm, about 80 to 190 μm, about 80 to 180 μm, about 80 to 160 μm, about 80 to 155 μm, about 80 to 140 μm, about 80 to 130 μm or about 80 to 120 μm.

(Base material layer 31)

In the exterior material 3 for electrical storage devices, the base material layer 31 is a layer that functions as a base material of the exterior material for electrical storage devices, and forms the outermost layer side of the exterior material for electrical storage devices.

The material that forms the base material layer 31 is not particularly limited as long as it has an insulation quality. Examples of the material that forms the base material layer 31 include polyester, polyamide, epoxy, acrylic resins, fluororesins, polyurethane, silicone resins, phenol, polyetherimide, polyimide and mixtures and copolymers thereof. Polyester such as polyethylene terephthalate or polybutylene terephthalate has the advantage that it is excellent in electrolytic solution resistance, so that whitening etc. due to deposition of an electrolytic solution hardly occurs, and thus

the polyester is suitably used as a material for formation of the base material layer 31. In addition, a polyamide film is excellent in stretchability, can prevent occurrence of whitening due to resin breakage in the base material layer 31 during molding, and is thus suitably used as a material for formation of the base material layer 31.

The base material layer 31 may be formed of a uniaxially or biaxially stretched resin film, or may be formed of an unstretched resin film. Among them, a uniaxially or biaxially stretched resin film, particularly a biaxially stretched resin film has improved heat resistance through orientation and crystallization, and is therefore suitably used as the base material layer 31.

Among them, nylons and polyesters are preferable and biaxially stretched nylons and biaxially stretched polyesters are more preferable as resin films for formation of the base material layer 31.

The base material layer 31 can also be laminated with a resin film which is made of a different material for improving pinhole resistance, and insulation quality as a packaging of an electrical storage device. Specific examples include a multi-layered structure in which a polyester film and a nylon film are laminated, and a multi-layered structure in which a biaxially stretched polyester and a biaxially stretched nylon are laminated. When the base material layer 31 is made to have a multi-layered structure, the resin films may be bonded with the use of an adhesive, or may be directly laminated without the use of an adhesive. Examples of the method for bonding the resin films without the use of an adhesive include methods in which the resin films are bonded in a heat-melted state, such as a co-extrusion method, a sand lamination method and a thermal lamination method.

In addition, the friction of the base material layer 31 may be reduced for improving moldability. When the friction of the base material layer 31 is reduced, the friction coefficient of the surface thereof is not particularly limited, and it is, for example, 1.0 or less. Examples of the method for reducing the friction of the base material layer 31 include matting treatment, formation of a thin film layer of a slipping agent, and a combination thereof.

The thickness of the base material layer 31 is, for example, about 10 to 50 μm, preferably about 15 to 30 μm.

(Adhesive agent layer 32)

In the exterior material 3 for electrical storage devices, the adhesive agent layer 32 is a layer disposed on the base material layer 31 if necessary for imparting adhesion to the base material layer 31. That is, the adhesive agent layer 32 is provided between the base material layer 31 and the barrier layer 33.

The adhesive agent layer 32 is formed from an adhesive capable of bonding the base material layer 31 and the barrier layer 33. The adhesive used for forming the adhesive agent layer 32 may be a two-liquid curable adhesive, or may be a one-liquid curable adhesive. In addition, the adhesion mechanism of the adhesive used for forming the adhesive agent layer 32 is not particularly limited, and may be any one of a chemical reaction type, a solvent volatilization type, a heat melting type, a heat pressing type and so on.

As resin components of adhesives that can be used for formation of the adhesive agent layer 32, polyurethane-based two-liquid curable adhesive agents; and polyamides, polyesters or blend resins of these resins and modified polyolefins are preferable because they are excellent in spreadability, durability and a yellowing inhibition action under high-humidity conditions, a thermal degradation inhibition action during heat-sealing, and so on, and effectively suppress occurrence of delamination by inhibiting a reduction in lamination strength between the base material layer 31 and the barrier layer 33.

The adhesive agent layer 32 may be made multilayered with different adhesive components. When the adhesive agent layer 32 is made multilayered with different components, it is preferable that a resin excellent in bondability to the base material layer 31 is selected as an adhesive component to be disposed on the base material layer 31 side, and an adhesive component excellent in bondability to the barrier layer 33 is selected as an adhesive component to be disposed on the barrier layer 33 side, from the viewpoint of improving lamination strength between the base material layer 31 and the barrier layer 33. When the adhesive agent layer 32 is made multilayered with different adhesive components, specific examples of the preferred adhesive component to be disposed on the barrier layer 33 side include acid-modified polyolefins, metal-modified polyolefins, mixed resins of polyesters and acid-modified polyolefins, and resins containing a copolymerization polyester.

The thickness of the adhesive agent layer 32 is, for example, about 2 to 50 μm, preferably about 3 to 25 μm.

(Barrier layer 33)

In the exterior material 3 for electrical storage devices, the barrier layer 33 is a layer which is intended to improve the strength of the exterior material for electrical storage devices and which has a function of preventing ingress of water vapor, oxygen, light and the like into the electrical storage device. The barrier layer 33 is preferably a metal layer, i.e., a layer formed of a metal. Specific examples of the metal forming the barrier layer 33 include aluminum, stainless and titanium, with aluminum being preferred. The barrier layer 33 can be formed from, for example, a metal foil, a metal vapor-deposited film, an inorganic oxide vapor-deposited film, a carbon-containing inorganic oxide vapor-deposited film, a film provided

with any of these vapor-deposited films, or the like, and is formed preferably from a metal foil, more preferably from an aluminum foil. From the viewpoint of preventing generation of wrinkles and pinholes in the barrier layer 33 during manufacturing of the exterior material for electrical storage devices, it is more preferable to form the barrier layer from a soft aluminum foil such as annealed aluminum (JIS H4160: 1994 A8021H-O, JIS H4160: 1994 A8079H-O, JIS H4000:2014 A8021P-O, JIS H4000:2014 A8079P-O).

The thickness of the barrier layer 33 is preferably about 10 to 200 μm, more preferably about 20 to 100 μm, about 20 to 45 μm, about 45 to 65 μm or about 65 to 85 μm, from the viewpoint of making pinholes less likely to be generated by molding while thinning the exterior material for electrical storage devices.

In addition, at least one surface, preferably both surfaces, of the barrier layer 33 are subjected to a chemical conversion treatment for stabilization of bonding, prevention of dissolution and corrosion, and so on. Here, the chemical conversion treatment is a treatment for forming a corrosion-resistant film on the surface of the barrier layer.

(Adhesive layer 34)

In the exterior material 3 for electrical storage devices, the adhesive layer 34 is a layer provided between the barrier layer 33 and the heat-sealable resin layer 35 if necessary for firmly bonding the heat-sealable resin layer 35.

The adhesive layer 34 is formed from an adhesive capable of bonding the barrier layer 33 and the heat-sealable resin layer 35 to each other. The composition of the adhesive used for forming the adhesive layer is not particularly limited, and examples thereof include resin compositions containing an acid-modified polyolefin. Examples of the acid-modified polyolefin include the same ones as those exemplified for the first layer 12a and the second layer 12b.

The thickness of the adhesive layer 34 is, for example, about 1 to 40 μm, preferably about 2 to 30 μm.

(Heat-sealable resin layer 35)

**In** the exterior material 3 for electrical storage devices, the heat-sealable resin layer 35 is a layer which corresponds to an innermost layer and performs a function of hermetically sealing the electrical storage device element by heat-sealing the heat-sealable resin layers to each other during construction of the electrical storage device.

The resin component to be used in the heat-sealable resin layer 35 is not particularly limited as long as it can be heat-welded, and examples thereof include polyolefins and cyclic polyolefins.

Specific examples of the polyolefin include polyethylene such as low-density polyethylene, medium-density polyethylene, high-density polyethylene and linear low-density polyethylene; crystalline or noncrystalline polypropylene such as homopolypropylene, block copolymers of polypropylene (e.g., block copolymers of propylene and ethylene) and random copolymers of polypropylene (e.g., random copolymers of propylene and ethylene); terpolymers of ethylene-butene-propylene; and the like. Among these polyolefins, polyethylene and polypropylene are preferred.

The cyclic polyolefin is a copolymer of an olefin and a cyclic monomer, and examples of the olefin as a constituent monomer of the cyclic polyolefin include ethylene, propylene, 4-methyl-1-pentene, butadiene and isoprene. Examples of the cyclic monomer as a constituent monomer of the cyclic polyolefin include cyclic alkenes such as norbornene, specifically cyclic dienes such as cyclopentadiene, dicyclopentadiene, cyclohexadiene and norbornadiene. Among these polyolefins, cyclic alkenes are preferable, and norbornene is further preferable. Examples of the constituent monomer include styrene.

Among these resin components, crystalline or noncrystalline polyolefins, cyclic polyolefins and blend polymers thereof are preferable, and polyethylene, polypropylene, copolymers of ethylene and norbornene, and blend polymers of two or more thereof are more preferable.

The heat-sealable resin layer 35 may be formed from one resin component alone, or may be formed from a blend polymer obtained by combining two or more resin components. Further, the heat-sealable resin layer 35 may have only one layer, but may have two or more layers formed of the same resin component or different resin components. It is particularly preferable that the resin of the second layer 12b and the resin of the heat-sealable resin layer 35 are common because adhesion between these layers is improved.

The thickness of the heat-sealable resin layer 35 is not particularly limited, and is, for example, about 2 to 2000 μm, preferably about 5 to 1000 μm, still more preferably about 10 to 500 μm. The thickness of the heat-sealable resin layer 35 is, for example, about 100 μm or less, preferably about 85 μm or less, more preferably about 15 to 85 μm. For example, when the thickness of the adhesive layer 34 described later is 10 μm or more, the thickness of the heat-sealable resin layer 35 is preferably about 85 μm or less, more preferably about 15 to 45 μm. For example, when the thickness of the adhesive layer 34 described later is less than 10 μm or the adhesive layer 34 is not provided, the thickness of the heat-sealable resin layer 35 is preferably about 20 μm or more, more preferably about 35 to 85 μm.

The exterior material for electrical storage devices according to the present disclosure can be in the form of a kit including an exterior material for electrical storage devices which is used for electrical storage devices, and the adhesive film for metal terminal according to the present disclosure. Even in this case, an electrical storage device to which the

present disclosure is applied includes an electrical storage device element including at least a positive electrode, a negative electrode, and an electrolyte; an exterior material for electrical storage devices which seals the electrical storage device element; and a metal terminal electrically connected to each of the positive electrode and the negative electrode and protruding to the outside of the exterior material for electrical storage devices. The kit of the present disclosure is used such that the adhesive film for metal terminal according to the present disclosure is interposed between a metal terminal and an exterior material for electrical storage devices.

2. Electrical storage device

The electrical storage device 10 of the present disclosure includes the electrical storage device element 4 including at least a positive electrode, a negative electrode and an electrolyte; the exterior material 3 for electrical storage devices that seals the electrical storage device element 4; and the metal terminal 2 electrically connected to each of the positive electrode and the negative electrode and protruding to the outside of the exterior material 3 for electrical storage devices. In the electrical storage device 10 of the present disclosure, the adhesive film 1 for metal terminal according to the present disclosure is interposed between the metal terminal 2 and the exterior material 3 for electrical storage devices. That is, the electrical storage device 10 of the present disclosure can be manufactured by a method including the step of interposing the adhesive film 1 for metal terminal according to the present disclosure between the metal terminal 2 and the exterior material 3 for electrical storage devices.

Specifically, the electrical storage device element 4 including at least a positive electrode, a negative electrode, and an electrolyte is covered with the exterior material 3 for electrical storage devices such that a flange portion (a region where the heat-sealable resin layers 35 contact each other, the region being a peripheral edge portion 3a of the exterior material 3 for electrical storage devices) of the exterior material 3 for electrical storage devices can be formed on the peripheral edge of the electrical storage device element 4, where the adhesive film 1 for metal terminal according to the present disclosure is interposed between the metal terminal 2 and the heat-sealable resin layer 35 while the metal terminal 2 connected to each of the positive electrode and the negative electrode protrudes to the outside, and the heat-sealable resin layers 35 at the flange portion are heat-sealed to each other, thereby providing the electrical storage device 10 using the exterior material 3 for electrical storage devices. When the electrical storage device element 4 is stored using the exterior material 3 for electrical storage devices, the heat-sealable resin layer 35 of the exterior material 3 for electrical storage devices is on the inner side (a surface contacting the electrical storage device element 4).

The exterior material for electrical storage devices according to the present disclosure can be suitably used for electrical storage devices such as batteries (including condensers, capacitors and the like). The exterior material for electrical storage devices according to the present disclosure may be used for either primary batteries or secondary batteries, and is preferably used for secondary batteries. The type of secondary battery to which the exterior material for electrical storage devices according to the present disclosure is applied is not particularly limited, and examples thereof include lithium ion batteries, lithium ion polymer batteries, all-solid-state batteries, semi-solid-state batteries, pseudo-solid-state batteries, polymer batteries, all-polymer batteries, lead storage batteries, nickel-hydrogen storage batteries, nickel-cadmium storage batteries, nickel-iron storage batteries, nickel-zinc storage batteries, silver oxide-zinc storage batteries, metal-air batteries, polyvalent cation batteries, condensers and capacitors. Of these secondary batteries, preferred subjects to which the exterior material for electrical storage devices according to the present disclosure is applied include lithium ion batteries and lithium ion polymer batteries.

Examples

Hereinafter, the present disclosure will be described in detail by way of examples and comparative examples. However, the present disclosure is not limited to the examples.

<Manufacturing of adhesive film for metal terminal>

Example 1

Using an extruder and a T-die casting device, maleic anhydride-modified polypropylene (r-PPa layer (maleic anhydride-modified random polypropylene layer), melting peak temperature: 140°C) as a second layer on the side of the metal terminal was extruded in a thickness of 60 μm to one surface of a polypropylene film (CPP layer (unstretched homopolypropylene layer), melting peak temperature: 160°C, thickness: 80 μm) as a polypropylene layer, and polypropylene (r-PP layer (random polypropylene layer), melting peak temperature 140°C) as a first layer on the side of the exterior material was extruded in a thickness of 60 μm to the other surface to obtain an adhesive film (total thickness: 200 μm) in which the first layer (r-PP layer, thickness 60 μm), the polypropylene layer (CPP layer, thickness 80 μm), and the second layer (r-PPa layer, thickness 60 μm) were laminated in this order.

In the adhesive films of Examples and Comparative Examples, the island portion ratio of the sea-island structure of the polypropylene layer, the soft segment component ratio of the adhesive film, and the heat of fusion of the adhesive film after heating, which will be described later, were each adjusted by controlling the content of polyethylene in the polypropylene film, the polymerization type (homo, block, or random), and the film forming conditions (temperature and speed at the time of film formation, cooling temperature and speed, and the like).

Example 2

Using an extruder and a T-die casting device, maleic anhydride-modified polypropylene (r-PPa layer (maleic anhydride-modified random polypropylene layer), melting peak temperature: 140°C) as a second layer on the side of the metal terminal was extruded in a thickness of 100 μm to one surface of a polypropylene film (CPP layer (unstretched homopolypropylene layer), melting peak temperature: 160°C, thickness: 50 μm) as a polypropylene layer, and polypropylene (r-PP layer (random polypropylene layer), melting peak temperature 140°C) as a first layer on the side of the exterior material was extruded in a thickness of 50 μm to the other surface to obtain an adhesive film (total thickness: 200 μm) in which the first layer (r-PP layer (random polypropylene layer), thickness 50 μm), the polypropylene layer (CPP layer, thickness 50 μm), and the second layer (r-PPa layer, thickness 100 μm) were laminated in this order.

Example 3

Using an extruder and a T-die casting device, maleic anhydride-modified polypropylene (r-PPa layer (maleic anhydride-modified random polypropylene layer), melting peak temperature: 140°C) as a second layer on the side of the metal terminal and maleic anhydride-modified polypropylene (h-PPa layer (maleic anhydride-modified homopolypropylene layer), melting peak temperature: 160°C) as a third layer located between a polypropylene layer and the second layer were extruded in thicknesses of 40 μm and 20 μm, respectively, to one surface of a polypropylene film (CPP layer (unstretched homopolypropylene layer), melting peak temperature: 160°C, thickness: 80 μm) as the polypropylene layer. Furthermore, polypropylene (r-PP layer (random polypropylene layer), melting peak temperature 140°C) as a first layer on the side of the exterior material was extruded in a thickness of 60 μm to the other surface of the polypropylene film as the polypropylene layer to obtain an adhesive film (total thickness: 200 μm) in which the first layer (r-PP layer, thickness 60 μm), the polypropylene layer (CPP layer, thickness 80 μm), the third layer (h-PPa layer, thickness 20 μm), and the second layer (r-PPa layer, thickness 40 μm) were laminated in this order.

Example 4

Using an extruder and a T-die casting device, maleic anhydride-modified polypropylene (r-PPa layer (maleic anhydride-modified random polypropylene layer), melting peak temperature: 140°C) as a second layer on the side of the metal terminal, and maleic anhydride-modified polypropylene (h-PPa layer (maleic anhydride-modified homopolypropylene layer), melting peak temperature: 160°C) as a third layer located between a polypropylene layer and the second layer were each extruded in a thickness of 30 μm to one surface of a polypropylene film (CPP layer (unstretched homopolypropylene layer), melting peak temperature: 160°C, thickness: 80 μm) as the polypropylene layer. Furthermore, polypropylene (r-PP layer (random polypropylene layer), melting peak temperature 140°C) as a first layer on the side of the exterior material was extruded in a thickness of 60 μm to the other surface of the polypropylene film as the polypropylene layer to obtain an adhesive film (total thickness: 200 μm) in which the first layer (r-PP layer, thickness 60 μm), the polypropylene layer (CPP layer, thickness 80 μm), the third layer (h-PPa layer, thickness 30 μm), and the second layer (r-PPa layer, thickness 30 μm) were laminated in this order.

Example 5

Using an extruder and a T-die casting device, maleic anhydride-modified polypropylene (r-PPa layer (maleic anhydride-modified random polypropylene layer), melting peak temperature: 140°C) as a second layer on the side of the metal terminal was extruded in a thickness of 20 μm to one surface of a polypropylene film (CPP layer (unstretched homopolypropylene layer), melting peak temperature: 160°C, thickness: 40 μm) as a polypropylene layer, and polypropylene (r-PP layer (random polypropylene layer), melting peak temperature 140°C) as a first layer on the side of the exterior material was extruded in a thickness of 20 μm to the other surface to obtain an adhesive film (total thickness: 80 μm) in which the first layer (r-PP layer, thickness 20 μm), the polypropylene layer (CPP layer, thickness 40 μm), and the second layer (r-PPa layer, thickness 20 μm) were laminated in this order.

Example 6

Using an extruder and a T-die casting device, maleic anhydride-modified polypropylene (r-PPa layer (maleic anhydride-modified random polypropylene layer), melting peak temperature: 140°C) as a second layer on the side of the metal terminal was extruded in a thickness of 25 μm to one surface of a polypropylene film (CPP layer (unstretched homopolypropylene layer), melting peak temperature: 160°C, thickness: 30 μm) as a polypropylene layer, and polypropylene (r-PP layer (random polypropylene layer), melting peak temperature 140°C) as a first layer on the side of the exterior material was extruded in a thickness of 25 μm to the other surface to obtain an adhesive film (total thickness: 80 μm) in which the first layer (r-PP layer, thickness 25 μm), the polypropylene layer (CPP layer, thickness 30 μm), and the second layer (r-PPa layer, thickness 25 μm) were laminated in this order.

Example 7

Using an extruder and a T-die casting device, maleic anhydride-modified polypropylene (r-PPa layer (maleic anhydride-modified random polypropylene layer), melting peak temperature: 140°C) as a second layer on the side of the metal terminal was extruded in a thickness of 20 μm to one surface of a polypropylene film (CPP layer (unstretched homopolypropylene layer), melting peak temperature: 160°C, thickness: 30 μm) as a polypropylene layer, and polypropylene (r-PP layer (random polypropylene layer), melting peak temperature 140°C) as a first layer on the side of the exterior material was extruded in a thickness of 30 μm to the other surface to obtain an adhesive film (total thickness: 80 μm) in which the first layer (r-PP layer, thickness 30 μm), the polypropylene layer (CPP layer, thickness 30 μm), and the second layer (r-PPa layer, thickness 20 μm) were laminated in this order.

Example 8

Using multilayer air-cooling inflation molding, a polypropylene film (PP layer), a melting peak temperature of 160°C, and a thickness of 80 μm) as a polypropylene layer, maleic anhydride-modified polypropylene (r-PPa layer (maleic anhydride-modified random polypropylene layer), melting peak temperature: 140°C, thickness: 37.5 μm) as a second layer on the side of the metal terminal, and maleic anhydride-modified polypropylene (r-PPa layer (maleic anhydride-modified random polypropylene layer), melting peak temperature: 140°C, thickness: 37.5 μm) as a first layer on the side of the exterior material were molded to obtain an adhesive film for metal terminal (total thickness of 150 μm) in which the first polyolefin layer (PPa layer thickness of 37.5 μm), the base material (PP layer thickness of 80 μm), and the second polyolefin layer (PPa layer thickness of 37.5 μm) were laminated in this order.

Example 9

A polypropylene film (CPP layer (unstretched homopolypropylene layer), melting peak temperature: 160°C, thickness: 80 μm) as a polypropylene layer was used as an adhesive film (total thickness: 80 μm). The island portion ratio of the sea-island structure was adjusted by the addition amount of polyethylene in the polypropylene layer.

Example 10

Using an extruder and a T-die casting device, maleic anhydride-modified polypropylene (r-PPa layer (maleic anhydride-modified random polypropylene layer), melting peak temperature: 140°C) as a second layer on the side of the metal terminal was extruded in a thickness of 60 μm to one surface of a polypropylene film (CPP layer (unstretched homopolypropylene layer), melting peak temperature: 160°C, thickness: 80 μm) as a polypropylene layer, and polypropylene (h-PP layer (homopolypropylene layer), melting peak temperature: 140°C) as a first layer on the side of the exterior material was extruded in a thickness of 60 μm to the other surface to obtain an adhesive film (total thickness: 200 μm) in which the first layer (h-PP layer, thickness 60 μm), the polypropylene layer (CPP layer, thickness 80 μm), and the second layer (r-PPa layer, thickness 60 μm) were laminated in this order.

Example 11

Using an extruder and a T-die casting device, maleic anhydride-modified polypropylene (h-PPa layer (maleic anhydride-modified homopolypropylene layer), melting peak temperature: 160°C) as a second layer on the side of the metal terminal was extruded in a thickness of 60 μm to one surface of a polypropylene film (CPP layer (unstretched homopolypropylene layer), melting peak temperature: 160°C, thickness: 80 μm) as a polypropylene layer, and polypropylene (r-PP layer (random polypropylene layer), melting peak temperature 140°C) as a first layer on the side of the exterior material was extruded in a thickness of 60 μm to the other surface to obtain an adhesive film (total thickness: 200

μm) in which the first layer (r-PP layer, thickness 60 μm), the polypropylene layer (CPP layer, thickness 80 μm), and the second layer (h-PPa layer, thickness 60 μm) were laminated in this order.

Example 12

Using an extruder and a T-die casting device, maleic anhydride-modified polypropylene (r-PPa layer (maleic anhydride-modified random polypropylene layer), melting peak temperature: 140°C) as a second layer on the side of the metal terminal was extruded in a thickness of 60 μm to one surface of a polypropylene film (CPP layer (unstretched random polypropylene layer), melting peak temperature: 140°C, thickness: 80 μm) as a polypropylene layer, and polypropylene (h-PP layer (homopolypropylene layer), melting peak temperature: 160°C) as a first layer on the side of the exterior material was extruded in a thickness of 60 μm to the other surface to obtain an adhesive film (total thickness: 200 μm) in which the first layer (h-PP layer, thickness 60 μm), the polypropylene layer (CPP layer, thickness 80 μm), and the second layer (r-PPa layer, thickness 60 μm) were laminated in this order.

Example 13

Using an extruder and a T-die casting device, maleic anhydride-modified polypropylene (h-PPa layer (maleic anhydride-modified homopolypropylene layer), melting peak temperature: 160°C) as a second layer on the side of the metal terminal was extruded in a thickness of 60 μm to one surface of a polypropylene film (CPP layer (unstretched random polypropylene layer), melting peak temperature: 140°C, thickness: 80 μm) as a polypropylene layer, and polypropylene (r-PP layer (random polypropylene layer), melting peak temperature 140°C) as a first layer on the side of the exterior material was extruded in a thickness of 60 μm to the other surface to obtain an adhesive film (total thickness: 200 μm) in which the first layer (r-PP layer, thickness 60 μm), the polypropylene layer (CPP layer, thickness 80 μm), and the second layer (h-PPa layer, thickness 60 μm) were laminated in this order.

Example 14

Using multilayer air-cooling inflation molding, a polypropylene film (h-PP layer), a melting peak temperature of 160°C, and a thickness of 30 μm) as a polypropylene layer, maleic anhydride-modified polypropylene (r-PPa layer (maleic anhydride-modified random polypropylene layer), melting peak temperature: 140°C, thickness: 50 μm) as a second layer on the side of the metal terminal side, and polypropylene (r-PP layer (random polypropylene layer, melting peak temperature 140°C, thickness 20 μm)) as a first layer on the side of the exterior material were molded to obtain an adhesive film for metal terminal (total thickness of 100 μm) in which the first polyolefin layer (PP layer thickness of 20 μm), the base material (PP layer thickness of 30 μm), and the second polyolefin layer (PPa layer thickness of 50 μm) were laminated in this order.

Comparative Example 1

Using multilayer air-cooling inflation molding, a polypropylene film (PP layer), a melting peak temperature of 160°C, and a thickness of 20 μm) as a polypropylene layer, maleic anhydride-modified polypropylene (r-PPa layer (maleic anhydride-modified random polypropylene layer), melting peak temperature: 140°C, thickness: 40 μm) as a second layer on the side of the metal terminal, polypropylene (r-PP layer (random polypropylene layer, melting peak temperature 140°C, thickness 35 μm), polypropylene (r-PP layer (random polypropylene layer, melting peak temperature 140°C, thickness 20 μm)) as a first layer on the side of the exterior material, and polypropylene (r-PP layer (random polypropylene layer, melting peak temperature 140°C, thickness 35 μm)) were molded to obtain an adhesive film (total thickness of 150 μm) in which the PP layer (thickness of 20 μm), the PP layer (thickness of 35 μm), the PP layer (thickness of 20 μm), the PP layer (thickness of 35 μm), and the PPa layer (thickness of 40 μm) were laminated in this order.

Comparative Example 2

A polypropylene film (CPP layer (unstretched homopolypropylene layer), homopolypropylene, melting peak temperature: 160°C, thickness: 80 μm) as a polypropylene layer was used as an adhesive film (total thickness: 80 μm). The island portion ratio of the sea-island structure was adjusted by the addition amount of polyethylene in the polypropylene layer.

Comparative Example 3

Using an extruder and a T-die casting device, a polypropylene film (PP layer (polypropylene layer), polypropylene, melting peak temperature: 160°C, thickness: 70 μm) as a polypropylene layer, and maleic anhydride-modified polypropylene (r-PPa layer (maleic anhydride-modified random polypropylene layer), melting peak temperature: 140°C) as a second layer on the side of the metal terminal were extruded in a thickness of 70 μm, and polypropylene (r-PP layer (random polypropylene layer), melting peak temperature 140°C) as a first layer on the side of the exterior material was co-extruded in a thickness of 60 μm to the other surface to obtain an adhesive film (total thickness: 200 μm) in which the first layer (r-PP layer (random polypropylene layer), thickness 60 μm), the polypropylene layer (PP layer, thickness 70 μm), and a second layer (r-PPa layer, thickness 70 μm) were laminated in this order.

Comparative Example 4

Using an extruder and a T-die casting device, a polypropylene film (PP layer (homopolypropylene layer), polypropylene, melting peak temperature: 160°C, thickness: 60 μm) as a polypropylene layer, and maleic anhydride-modified polypropylene (r-PPa layer (maleic anhydride-modified random polypropylene layer), melting peak temperature: 140°C) as a second layer on the side of the metal terminal were extruded in a thickness of 50 μm, and polypropylene (r-PP layer (random polypropylene layer), melting peak temperature 140°C) as a first layer on the side of the exterior material was extruded in a thickness of 40 μm to the other surface to obtain an adhesive film (total thickness: 150 μm) in which the first layer (r-PP layer (random polypropylene layer), thickness 40 μm), the polypropylene layer (PP layer, thickness 60 μm), and the second layer (r-PPa layer, thickness 50 μm) were laminated in this order.

<Measurement of island portion ratio of sea-island structure of polypropylene layer>

The island portion ratio of the sea-island structure of the polypropylene layer of the adhesive film was measured by the following method. In a case where the adhesive film included a single layer of the polypropylene layer, the single layer of the polypropylene layer was used as a measurement target. Furthermore, in a case where the adhesive film included multiple layers, the polypropylene layer that did not constitute the surface of the adhesive film was used as a measurement target, and the island portion ratio in the polypropylene layer having the smallest island portion ratio (specifically, the h-CPP layer or the r-CPP layer for Examples 1 to 14 and Comparative Examples 2 to 4, and the h-PP layer for Comparative Example 1) was shown in Table 1.

An adhesive film was embedded in a thermosetting epoxy resin and cured. A cross-section in an intended direction (cross-section a direction parallel to TD and in a thickness direction) was prepared using a commercially available rotary microtome (UC6 manufactured by LEICA Company) and a diamond knife. Here, the cross-section was prepared at -70 °C with a cryomicrotome using liquid nitrogen. The embedded resin was dyed with ruthenium tetroxide for 12 hours. Since the polypropylene expands when dyed, the expanded portion was trimmed with a microtome, the resin was cut by 100 nm to 300 nm in the machine direction, and when the resin was cut about 1 μm to 2 μm in total, the exposed cross-section of the polypropylene layer was observed as follows. The dyed cross-section was observed with a field emission-type scanning electron microscope (S -4800 TYPE 1 manufactured by Hitachi High-Technologies Corporation, measurement conditions: 3 kV 20 mA High WD 6 mm detector (Upper)), and an image (magnification: 10000 times) was acquired. Next, using image processing software (image analysis software WinROOF (Ver7.4) manufactured by MITANI CORPORATION) capable of binarizing the image, the island portion and the sea portion of the sea-island structure were binarized, and a ratio of the total area of the island portion (the total area of the island portion/the area of the measurement range of the image) was determined. Table 1 shows the results. In this measurement, the island portion is dyed more than the sea portion, so that the island portion looks brighter than the sea portion.

[Image processing conditions]

The image processing was performed using image analysis software ImageJ. Specifically, a SEM image is acquired as a digital file of a grayscale image (JPEG), processing was performed in accordance with the following binarization processing procedure and parameters, a pixel with a gray level equal to or greater than a threshold (bright) was output as 1, a pixel with a gray level less than the threshold was output as 0, and the former pixel and the latter pixel were defined as an island portion and a sea portion, respectively.

<Binarization processing>

1. Removal of spike noise (Despeckle)
2. Removal of contour of island portion (Remove Outliers radius=4 threshold=1 which=Bright)
3. Removal of contour of sea portion (Remove Outliers radius=4 threshold=1 which=Dark)

4. Removal of spike noise (Despeckle)
5. Gaussian blur in X-axis (short side of sample) direction (Threshold = 3 pixels)
6. Contrast enhancement (saturated = 0.2)
7. Removal of contour of island portion (Remove Outliers radius=4 threshold=1 which=Bright)
8. Removal of contour of sea portion (Remove Outliers radius=4 threshold=1 which=Dark)
9. Otsu's binarization

<Measurement of ratio of soft segment component after heating of adhesive film>

The adhesive film was heated at a temperature of 200°C and a surface pressure of 0.25 MPa for 16 seconds to prepare a sample. Next, the ratio of the soft segment component after heating of the adhesive film (the ratio of the soft segment component by a Solid Echo method using pulsed NMR) was measured by the following method.

The sample was introduced into a glass sample tube having a diameter of 10 mm, and the sample tube was placed in a pulsed NMR device (the minispec mq20 manufactured by BRUKER Corporation) and held at 440°C for 5 minutes, and then a free induced decay curve of the spin-spin relaxation of 1H was obtained by a Solid Echo method at 40°C. The number of scans in the Solid Echo method was set to 64 times. The obtained decay curve was waveform separated into three curves derived from three components of a hard segment component, an intermediate segment component, and a soft segment component. Waveform separation was obtained by fitting the hard segment component as a function of a Gaussian type and the intermediate segment component and the soft segment component as a function of an Exponential type using analysis software "TD-NMRA (Version 4.3 Rev 0.8)" manufactured by BRUKER Corporation. For the analysis, measurement points up to 0.6 msec of the transition curve are used. The following formula was used for fitting.

$$Y = A_1 \times \exp(-(t/\tau_1)^{w1}) + A_2 \times \exp(-(t/\tau_2)^{w2}) + A_3 \times \exp(-(t/\tau_3)^{w3})$$

Here, w1 to w3 are Weibull coefficients, w1 takes a value of 2, and w2 and w3 take values of 1. $A_1$ represents a component ratio of the hard segment component, $A_2$ represents a component ratio of the intermediate segment component, $A_3$ represents a component ratio of the soft segment component, $\tau_1$ represents a component ratio of the hard segment component, $\tau_2$ represents a component ratio of the intermediate segment component, and $\tau_3$ represents a relaxation time of the soft segment component. t is time.

<Measurement of heat of fusion after heating of adhesive film>

The adhesive film was heated at a temperature of 200°C and a surface pressure of 0.25 MPa for 16 seconds. Next, the heat of fusion was measured in accordance with the provisions of JIS K 7122:2012. The measurement was performed using a differential scanning calorimeter (DSC, differential scanning calorimeter TA7000 manufactured by Hitachi High-Technologies Corporation). The measurement sample was held at -50°C for 15 minutes, and then the temperature was raised from -50°C to 210°C at a temperature rise rate of 10°C/min. A first heat of fusion ΔH (J/g) was measured, and then the measurement sample was held at 210°C for 10 minutes. Next, the measurement sample was cooled from 210°C to -50°C at a temperature lowering rate of 10°C/min, and held for 15 minutes. Moreover, the temperature was raised from -50°C to 210°C at a temperature rise rate of 10°C/min, and the second heat of fusion ΔH (J/g) was measured. The flow rate of the nitrogen gas was set to 50 ml/min. According to the above procedure, the value of the heat of fusion ΔH (J/g) measured at the first time was adopted as the heat of fusion. The heat of fusion was an area surrounded by a base line (a line formed by connecting a start point and an end point of a ridge line from the base to the base) and a peak in the DSC curve.

<Measurement of water vapor permeability of adhesive film>

First, an exterior material for electrical storage devices (hereinafter, it may be simply referred to as "exterior material") was prepared by the following procedure. For a base material layer, a biaxially stretched polyethylene terephthalate (PET) film (thickness: 12 μm) and a stretched nylon (ONy) film (thickness: 15 μm) were prepared. The PET film and the ONy film were bonded with a two-liquid urethane adhesive (polyol compound and aromatic isocyanate-based compound), and aging treatment was performed to obtain a base material layer (thickness: 30 μm) in which a PET film (thickness: 12 μm), an adhesive agent layer (thickness after curing: 3 μm) and an ONy film (thickness: 15 μm) were laminated in this order from the outside. In addition, an aluminum foil (JIS H4160:1994 A8021 H-O (thickness: 40 μm)) was prepared as a barrier layer. Next, the surface of the base material layer on an ONy film side and the barrier layer were bonded using a two-liquid urethane adhesive (polyol compound and aromatic isocyanate-based compound), and an aging

treatment was performed to obtain an exterior material for electrical storage devices (total thickness: 73 μm) in which a laminate of base material layer (thickness: 30 μm)/adhesive agent layer (thickness after curing: 3 μm)/barrier layer (thickness: 40 μm) was laminated in this order.

Next, as shown in the schematic diagram of Fig. 9, the obtained exterior material 3 was cut into a square having a length (MD) of 120 mm and a width (TD) of 120 mm (Fig. 9a). Furthermore, two sheets obtained by cutting the adhesive film 1 into a rectangle having a length (MD) of 120 mm and a width (TD) of 10 mm and two sheets obtained by cutting the adhesive film 1 into a rectangle having a length (MD) of 100 mm and a width (TD) of 10 mm were prepared. On a barrier layer side of the exterior material 3, adhesive films having the same longitudinal length were disposed to face each other along the periphery of the exterior material 3 (Fig. 9b). At this time, a second layer side of the adhesive film was set to be the barrier layer side of the exterior material 3. Next, a polytetrafluoroethylene film (PTFE film, thickness 100 μm) was placed on the adhesive films of the laminate (the surfaces of the adhesive films were covered with a PTFE film), and in a state of a silicon sheet/PTFE/the laminate/PTFE/silicone sponge sheet, the polytetrafluoroethylene film was placed on a press machine heated to 200°C, and at the same time, the polytetrafluoroethylene film was allowed to stand for 16 seconds under the condition of a pressure of 0.25 MPa to heat-seal the adhesive films to the exterior material 3. The laminate after heat-sealing was naturally cooled to 25°C, and the PTFE film was peeled off from the laminate. This heating treatment is heating assuming physical properties after the adhesive film is disposed between the exterior material for electrical storage devices and the metal terminal and heat-sealed. Next, the exterior material 3 was bent in half in the longitudinal direction so that the adhesive films were on the inner side (Fig. 9c). Two adhesive films for metal terminal having the length (MD) of 120 mm were disposed to overlap each other between the exterior materials 3 along long sides to be heat-sealed described later, and the adhesive films for metal terminal having the length (MD) of 100 mm were disposed to be bent in half between the exterior materials 3 along short sides to be heat-sealed described later. The peripheral portion of the exterior material 3 is a laminate in which an exterior material/an adhesive film/an adhesive film/an exterior material are laminated in this order (Fig. 9c).

Next, using a heat seal bar (stainless steel plate), the respective layers of the laminate were thermally fused at the positions of the long side and the short side of the laminate to form a bag shape in which one short side was not heat-sealed (Fig. 9c). As conditions for heat sealing, the long side was heat-sealed once at a temperature of 190°C and a surface pressure of 0.5 MPa for 1.5 seconds using a heat seal bar having a width of 7 mm (s1 in Fig. 9c). Furthermore, the short side was heat-sealed once under conditions of a temperature of 190°C, a surface pressure of 0.5 MPa, and 1.5 seconds using a heat seal bar having a width of 7 mm (s2 in Fig. 9c). Dried in a dry room for 1 day. Next, about 3.0 g of a liquid (moisture content: 0%) of ethylene carbonate: diethyl carbonate: dimethyl carbonate = 1 : 1 : 1 (volume ratio) was injected from the position of the short side not heat-sealed (Fig. 9d), and the short side not heat-sealed was also heat-sealed in the same manner as the short side described above (s3 in Fig. 9e) to form a sealed bag (Fig. 9e). The sealed bag was allowed to stand in an environment of a temperature of 65°C and a relative humidity of 90% for 30 days, and then the moisture content of the liquid taken out from the sealed bag was measured by the Karl Fischer method in a dry room to obtain contained moisture (ppm). The water vapor permeability (g·mm/($m^2$·day)) was determined by calculation from the amount (g) of the electrolytic solution charged from the obtained contained moisture, the permeation distance (mm), the permeation cross-sectional area ($m^2$), and the number of days of storage (day).

Water vapor permeability (g·mm/($m^2$·day)) = [obtained contained moisture (ppm) × charged electrolytic solution (g) × permeation distance (mm)]/[permeation cross- sectional area ($m^2$) × number of days of storage (day)]

· Obtained contained moisture (ppm): obtained by Karl Fischer's method.
· Input electrolytic solution (g): 3.0 g
· Permeation distance (mm): seal width 7 mm
· Permeation cross-sectional area ($m^2$): residual thickness (μm) × seal inner periphery 200 (mm)
· Number of days of storage (day): 30 days

<Measurement of adhesive strength between adhesive film and metal terminal>

The adhesive strength between the adhesive film and the metal terminal was measured by the following procedure. Table 1 shows the results. The adhesive strength of the adhesive film to the metal terminal was measured by the following method. Table 1 shows the results. As a metal terminal, aluminum (JIS H4160: 1994 A8079H-O) having a length of 50 mm, a width of 22.5 mm and a thickness of 400 μm was prepared. Each of the adhesive films for metal terminal, which had been obtained in examples and comparative examples, was cut to a length of 45 mm and a width of 10 mm. Next, the adhesive film for metal terminal was placed on the metal terminal to obtain a laminate of a metal terminal and an adhesive film. Here, the metal terminal and the adhesive film were laminated so that the longitudinal direction and the

lateral direction of the metal terminal coincided with the length direction and the width direction of the adhesive film for metal terminal, respectively, and the centers of the metal terminal and the adhesive film for metal terminal coincided with each other. Furthermore, the second layer of the adhesive film for metal terminal is disposed on the side of the metal terminal. Next, with a polytetrafluoroethylene film (PTFE film, thickness 100 μm) placed on the adhesive film for metal terminal of the laminate (with the PTFE film covering a surface of the adhesive film for metal terminal), the laminate was put on a pressing machine heated to 200°C (the metal terminal is on the hot plate side), a silicone sponge sheet was put thereon, and the laminate was left standing at a pressure of 0.25 MPa for 16 seconds to heat-seal the adhesive film to the metal terminal. The laminate (pre-seal tab) after heat-sealing was naturally cooled to 25°C. Next, the adhesive film for metal terminal was peeled off from the metal terminal in an environment at 25°C using Tensilon Versatile Material Tester (RTG-1210 manufactured by A&D Company, Limited). Specifically, at the center portion of the obtained pre-seal tab, a cut was made along the lateral direction with respect to the metal terminal, and the cut portion was bent several times to cut only the metal terminal due to metal fatigue. Next, as shown in the schematic diagram of Fig. 12, the metal terminal protruding from the adhesive film was cut off on one side in the longitudinal direction (x direction, MD) of the metal terminal with a cut portion of the metal terminal (central portion of the pre-seal tab 20) as a boundary. A two-dot chain line portion in Fig. 12 is a portion obtained by cutting the metal terminal. Next, as shown in Fig. 13, a tape 21 was attached to the side of the pre-seal tab where the metal terminal 2 was cut. A jig 22 for fixing the pre-seal tab was attached to the other side of the pre-seal tab. The adhesive film for metal terminal was delaminated from the metal terminal by attaching the tape 21 and the jig 22 to a chuck 23 of the Tensilon universal material testing machine and pulling the gap between the chucks in the 180° direction. The maximum strength during the peeling was defined as adhesion strength to the metal terminal (N/15 mm). The peeling speed was 50 mm/min, the peeling angle was 180°, and the distance between chucks was 30 mm. An average of the values of three measurements was adopted. Table 1 shows the results. The treatment in which the laminate is left standing for 16 seconds in a heating and pressurizing environment at a temperature of 200°C and a surface pressure of 0.25 MPa simulates heat and pressure applied in the temporary bonding step and the primary bonding step.

<Measurement of adhesive strength between adhesive film and exterior material>

The adhesive strength between the exterior material of the adhesive film and the metal terminal was measured by the following procedure. Table 1 shows the results.

(Production of exterior material)

First, an exterior material for electrical storage devices (hereinafter, sometimes referred to simply as an "exterior material") was produced in accordance with the following procedure. A base material layer (thickness: 30 μm) including a polyethylene terephthalate film (thickness: 12 μm), an adhesive agent layer (thickness: 3 μm) and a nylon film (thickness: 15 μm) was laminated onto an aluminum alloy foil (thickness: 40 μm) by a dry lamination method, and a heat-sealable resin layer was laminated on the other surface by co-extrusion. Specifically, a two-liquid urethane adhesive (polyol compound and aromatic isocyanate-based compound) was applied to the nylon film, so that an adhesive agent layer (thickness: 3 μm) was formed on the nylon film. Next, an adhesive agent layer and a polyethylene terephthalate film were laminated onto the nylon film to produce a base material layer. A two-liquid urethane adhesive (polyol compound and aromatic isocyanate-based compound) was then applied to one surface of a barrier layer including an aluminum alloy foil, so that an adhesive agent layer (thickness: 3 μm) was formed on the aluminum alloy foil. The adhesive agent layer and the base material layer having a bonding surface on the nylon film side were then laminated onto the aluminum alloy foil, and aging treatment was then performed to produce a laminate of base material layer/adhesive agent layer/barrier layer. Next, an adhesive layer composed of a maleic anhydride-modified polypropylene resin (thickness: 40 μm, disposed on the metal layer side) and a heat-sealable resin layer (thickness: 40 μm thick, innermost layer) composed of a random polypropylene resin were co-extruded onto the barrier layer of the laminate to laminate the adhesive layer and the heat-sealable resin layer on the barrier layer, thereby obtaining an exterior material for electrical storage devices in which a base material layer, an adhesive agent layer, a barrier layer, an adhesive layer and a heat-sealable resin layer were laminated in the stated order.

Next, as the metal terminal 2, an aluminum foil (JIS H4160:1994 A8079H-O) having a MD of 25 mm, a TD of 22.5 mm, and a thickness of 400 μm was prepared. Furthermore, each of the adhesive films 1 obtained in Examples and Comparative Examples was cut into MD 25mm and TD 20mm. Next, as shown in the schematic diagram of Fig. 10, the metal terminal was sandwiched between the two adhesive films to obtain a laminate of an adhesive film, a metal terminal and an adhesive film. At this time, the metal terminal and the adhesive films were laminated so that MD and TD of the metal terminal coincided with the length direction and the width direction of the adhesive films, respectively, and the centers of the metal terminal and the adhesive films coincided with each other (see Fig. 10(a)). Furthermore, the second layer of the adhesive film for metal terminal is disposed on the side of the metal terminal. Next, the laminate was sandwiched between two polytetrafluoroethylene films (PTFE film, thickness 100 μm) and heated at a temperature of 200°C and a surface pressure of 0.25 MPa for 16 seconds to heat-seal the adhesive film to the metal terminal, thereby producing a metal

terminal with an adhesive film (see Fig. 10(b)). Here, as shown in the schematic view of Fig. 10, the metal terminal was sandwiched between the adhesive films to form a portion in which the periphery of the metal terminal was covered with the adhesive film and the two adhesive films were heat-sealed to each other. Next, the exterior material was cut into a size of TD 60mm and MD 200mm, and as shown in the schematic diagram of Fig. 11, the heat-sealable resin layers of the exterior material were opposed to each other with the heat-sealable resin layers facing inside, and the obtained laminate was sandwiched between the opposed heat-sealable resin layers (see Fig. 11 (a)). At this time, the exterior material and the laminate were laminated so that MD and TD of the exterior material corresponded to the width direction and the length direction of the laminate, respectively. In this state, using a heat seal tester, heat sealing (see the shaded region S in Fig. 11(b)) was performed under the conditions of a width of 7 mm (7 mm in the y-axis direction in Fig. 11(b)), 200°C, a surface pressure of 3.0 MPa, and 1.5 seconds, and natural cooling was performed up to 25°C to obtain a laminate in which the exterior material and the adhesive film were heat-sealed (see Fig. 11(b)). Next, the central portion in the short side direction of the obtained laminate was cut into a width of 15 mm (for the cutting position, see the two-dot broken line in Fig. 11(b)). Next, in an environment of 25°C, the adhesive film and the heat-sealable resin layer of the exterior material were delaminated with a Tensilon universal material testing machine (RTG -1210 manufactured by A & D Company, Limited). The maximum strength during the peeling was defined as peeling strength (N/15 mm) with respect to the exterior material. The peeling speed was 20 mm/min, the peeling angle was 180°, and the distance between the chucks was 30 mm. An average of the values of three measurements was adopted.

[Table 1]

| | Laminated configuration of adhesive film | Polypropylene layer | | Adhesive film | | | | |
|---|---|---|---|---|---|---|---|---|
| | | Island portion ratio of sea-island structure (%) | Thickness ratio | Ratio of soft segment after heating (%) | Heat of fusion after heating (J/g) | Water vapor permeability coefficient (g·mm/(m2·day)) | Adhesive strength between adhesive film and metal terminal (N/15 mm) | Adhesive strength between adhesive film and exterior material (N/15 mm) |
| Example 1 | r-PP60/h-CPP80/r-PPa60 | 0.04 | 0.40 | 16.0 | 70.2 | 4.01 | 52 | 97 |
| Example 2 | r-PP50/h-CPP50/r-PPa100 | 0.04 | 0.25 | 16.5 | 72.8 | 4.18 | 55 | 96 |
| Example 3 | r-PP60/h-CPP80/h-PPa20/r-PPa40 | 0.04 | 0.40 | 15.9 | 67.5 | 4.00 | 52 | 96 |
| Example 4 | r-PP60/h-CPP80/h-PPa30/r-PPa30 | 0.04 | 0.40 | 15.8 | 68.2 | 3.95 | 53 | 96 |
| Example 5 | r-PP20/h-CPP40/r-PPa20 | 0.06 | 0.50 | 15.5 | 75.9 | 3.40 | 34 | 80 |
| Example 6 | r-PP25/h-CPP30/r-PPa25 | 0.06 | 0.38 | 15.6 | 75.9 | 3.45 | 32 | 85 |
| Example 7 | r-PP30/h-CPP30/r-PPa20 | 0.06 | 0.38 | 15.7 | 75.9 | 3.50 | 32 | 88 |
| Example 8 | r-PP37.5/h-CPP80/r-PPa37.5 | 12.74 | 0.52 | 16.1 | 63.6 | 3.80 | 46 | 72 |
| Example 9 | h-CPP80 | 0.04 | 1.00 | 5.0 | 82.0 | 3.26 | 2 | 30 |

(continued)

| | Laminated configuration of adhesive film | Polypropylene layer | | Adhesive film | | | | |
|---|---|---|---|---|---|---|---|---|
| | | Island portion ratio of sea-island structure (%) | Thickness ratio | Ratio of soft segment after heating (%) | Heat of fusion after heating (J/g) | Water vapor permeability coefficient (g·mm/(m2·day)) | Adhesive strength between adhesive film and metal terminal (N/15 mm) | Adhesive strength between adhesive film and exterior material (N/15 mm) |
| Example 10 | h-PP60/h-CPP80/r-PPa60 | 12.20 | 0.40 | 12.5 | 75.0 | 3.79 | 50 | 43 |
| Example 11 | r-PP60/h-CPP80/h-PPa60 | 18.20 | 0.40 | 12.5 | 75.0 | 3.79 | 26 | 94 |
| Example 12 | h-PP60/r-CPP80/r-PPa60 | 12.20 | 0.40 | 16.5 | 60.0 | 4.08 | 49 | 44 |
| Example 13 | r-PP60/r-CPP80/h-PPa60 | 18.20 | 0.40 | 16.5 | 60.0 | 4.08 | 26 | 94 |
| Example 14 | r-PP20/h-CPP30/r-PPa50 | 13.58 | 0.30 | 21.1 | 61.6 | 4.20 | 28 | 69 |
| Comparative Example 1 | r-PP20/r-PP35/h-PP20/r-PP35/r-PPa40 | 23.97 | 0.13 | 22.4 | 64.7 | 4.40 | 48 | 86 |
| Comparative Example 2 | h-CPP80 | 23.50 | 1.00 | 18.8 | 63.0 | 4.35 | 10 | 35 |
| Comparative Example 3 | r-PP60/h-CPP70/r-PPa70 | 22.13 | 0.35 | 26.0 | 60.0 | 5.11 | 51 | 70 |
| Comparative Example 4 | r-PP40/h-CPP60/r-PPa50 | 21.28 | 0.40 | 25.5 | 60.1 | 5.05 | 43 | 71 |

In Table 1, the numerical value in the laminated configuration of the adhesive film means the thickness (μm) of each layer.

As described above, the present disclosure provides inventions of aspects as described below.

Item 1. An adhesive film for metal terminal interposed between a metal terminal electrically connected to an electrode of an electrical storage device element and an exterior material for electrical storage devices which seals the electrical storage device element,

the adhesive film for metal terminal including at least a polypropylene layer, in which
a sea-island structure is observed in a cross-sectional image acquired using a scanning electron microscope for a cross-section of the polypropylene layer in a direction parallel to TD and in a thickness direction, and
an island portion ratio of the sea-island structure of the polypropylene layer is 20% or less.

Item 2. The adhesive film for metal terminal according to item 1, in which the adhesive film for metal terminal includes a single layer of the polypropylene layer.
Item 3. The adhesive film for metal terminal according to item 1, in which

the adhesive film for metal terminal includes multiple layers, and
the polypropylene layer includes a layer that does not constitute a surface of the adhesive film for metal terminal.

Item 4. The adhesive film for metal terminal according to item 3, in which a ratio of a thickness of the polypropylene layer to a thickness of the adhesive film for metal terminal is 0.20 or more.
Item 5. The adhesive film for metal terminal according to any one of items 1 to 4, in which the polypropylene layer contains modified polypropylene.
Item 6. The adhesive film for metal terminal according to any one of items 1 to 5, in which the adhesive film for metal terminal has a ratio of a soft segment component of 20% or less as measured by a Solid Echo method using pulsed NMR in an environment at a temperature of 40°C after heating the adhesive film for metal terminal under conditions of a temperature of 200°C and a surface pressure of 0.25 Pa for 16 seconds.
Item 7. The adhesive film for metal terminal according to any one of items 1 to 6, in which a heat of fusion measured after heating the adhesive film for metal terminal at a temperature of 200°C and a surface pressure of 0.25 Pa for 16 seconds is 50 J/g or more.
Item 8. The adhesive film for metal terminal according to any one of items 1 to 7, in which water vapor permeability of the adhesive film for metal terminal is 5.10 g·mm/($m^2$·day) or less.
Item 9. A method for manufacturing an adhesive film for metal terminal interposed between a metal terminal electrically connected to an electrode of an electrical storage device element and an exterior material for electrical storage devices which seals the electrical storage device element, in which

the adhesive film for metal terminal includes at least a polypropylene layer,
a sea-island structure is observed in a cross-sectional image acquired using a scanning electron microscope for a cross-section of the polypropylene layer in a direction parallel to TD and in a thickness direction, and
an island portion ratio of the sea-island structure of the polypropylene layer is 20% or less.

Item 10. A metal terminal with an adhesive film for metal terminal, in which the adhesive film for metal terminal according to any one of items 1 to 8 is attached to a metal terminal.
Item 11. An electrical storage device including: an electrical storage device element including at least a positive electrode, a negative electrode, and an electrolyte; an exterior material for electrical storage devices which seals the electrical storage device element; and the metal terminal electrically connected to each of the positive electrode and the negative electrode and protruding to outside of the exterior material for electrical storage devices, in which the adhesive film for metal terminal according to any one of items 1 to 8 is interposed between the metal terminal and the exterior material for electrical storage devices.
Item 12. A method for manufacturing an electrical storage device including: an electrical storage device element including at least a positive electrode, a negative electrode, and an electrolyte; the exterior material for electrical storage devices which seals the electrical storage device element; and the metal terminal electrically connected to each of the positive electrode and the negative electrode and protruding to outside of the exterior material for electrical storage devices,
the method including a step of interposing the adhesive film for metal terminal according to any one of items 1 to 8 between the metal terminal and the exterior material for electrical storage devices, and sealing the electrical storage device element with the exterior material for electrical storage devices.

Item 13. An exterior material for electrical storage devices which is used for an electrical storage device,

the electrical storage device including: an electrical storage device element including at least a positive electrode, a negative electrode, and an electrolyte; the exterior material for electrical storage devices which seals the electrical storage device element; and the metal terminal electrically connected to each of the positive electrode and the negative electrode and protruding to outside of the exterior material for electrical storage devices, in which an adhesive film for metal terminal is interposed between the metal terminal and the exterior material for electrical storage devices, and

the adhesive film for metal terminal is the adhesive film for metal terminal according to any one of items 1 to 8, the exterior material for electrical storage devices including a laminate including at least a base material layer, a barrier layer and a heat-sealable resin layer. Item 14. A kit including: an exterior material for electrical storage devices which is used for an electrical storage device; and the adhesive film for metal terminal according to any one of items 1 to 8,

the electrical storage device including an electrical storage device element including at least a positive electrode, a negative electrode, and an electrolyte; the exterior material for electrical storage devices which seals the electrical storage device element; and the metal terminal electrically connected to each of the positive electrode and the negative electrode and protruding to outside of the exterior material for electrical storage devices,

the kit being used with the adhesive film for metal terminal being interposed between the metal terminal and the exterior material for electrical storage devices. Reference Signs List

1 Adhesive film for metal terminal
2 Metal terminal
3 Exterior material for electrical storage devices
3a Peripheral edge portion of exterior material for electrical storage devices
4 Electrical storage device element
10 Electrical storage device
11 Polypropylene layer
12a First layer
12b Second layer
12c Third layer
31 Base material layer
32 Adhesive agent layer
33 Barrier layer
34 Adhesive layer
35 Heat-sealable resin layer

## Claims

**1.** An adhesive film for metal terminal interposed between a metal terminal electrically connected to an electrode of an electrical storage device element and an exterior material for electrical storage devices which seals the electrical storage device element,

the adhesive film for metal terminal comprising at least a polypropylene layer, wherein

a sea-island structure is observed in a cross-sectional image acquired using a scanning electron microscope for a cross-section of the polypropylene layer in a direction parallel to TD and in a thickness direction, and

an island portion ratio of the sea-island structure of the polypropylene layer is 20% or less.

**2.** The adhesive film for metal terminal according to claim 1, wherein the adhesive film for metal terminal includes a single layer of the polypropylene layer.

**3.** The adhesive film for metal terminal according to claim 1, wherein

the adhesive film for metal terminal includes multiple layers, and

the polypropylene layer includes a layer that does not constitute a surface of the adhesive film for metal terminal.

4. The adhesive film for metal terminal according to claim 3, wherein a ratio of a thickness of the polypropylene layer to a thickness of the adhesive film for metal terminal is 0.20 or more.

5. The adhesive film for metal terminal according to any one of claims 1 to 4, wherein the polypropylene layer contains modified polypropylene.

6. The adhesive film for metal terminal according to any one of claims 1 to 4, wherein the adhesive film for metal terminal has a ratio of a soft segment component of 20% or less as measured by a Solid Echo method using pulsed NMR in an environment at a temperature of 40°C after heating the adhesive film for metal terminal under conditions of a temperature of 200°C and a surface pressure of 0.25 Pa for 16 seconds.

7. The adhesive film for metal terminal according to any one of claims 1 to 4, wherein a heat of fusion measured after heating the adhesive film for metal terminal at a temperature of 200°C and a surface pressure of 0.25 Pa for 16 seconds is 50 J/g or more.

8. The adhesive film for metal terminal according to any one of claims 1 to 4, wherein water vapor permeability of the adhesive film for metal terminal is 5.10 g·mm/($m^2$·day) or less.

9. A method for manufacturing an adhesive film for metal terminal interposed between a metal terminal electrically connected to an electrode of an electrical storage device element and an exterior material for electrical storage devices which seals the electrical storage device element, wherein

the adhesive film for metal terminal includes at least a polypropylene layer,
a sea-island structure is observed in a cross-sectional image acquired using a scanning electron microscope for a cross-section of the polypropylene layer in a direction parallel to TD and in a thickness direction, and
an island portion ratio of the sea-island structure of the polypropylene layer is 20% or less.

10. A metal terminal with an adhesive film for metal terminal, wherein the adhesive film for metal terminal according to any one of claims 1 to 4 is attached to a metal terminal.

11. An electrical storage device comprising: an electrical storage device element including at least a positive electrode, a negative electrode, and an electrolyte; an exterior material for electrical storage devices which seals the electrical storage device element; and the metal terminal electrically connected to each of the positive electrode and the negative electrode and protruding to outside of the exterior material for electrical storage devices, wherein
the adhesive film for metal terminal according to any one of claims 1 to 4 is interposed between the metal terminal and the exterior material for electrical storage devices.

12. A method for manufacturing an electrical storage device including: an electrical storage device element including at least a positive electrode, a negative electrode, and an electrolyte; the exterior material for electrical storage devices which seals the electrical storage device element; and the metal terminal electrically connected to each of the positive electrode and the negative electrode and protruding to outside of the exterior material for electrical storage devices, the method comprising a step of interposing the adhesive film for metal terminal according to any one of claims 1 to 4 between the metal terminal and the exterior material for electrical storage devices, and sealing the electrical storage device element with the exterior material for electrical storage devices.

13. An exterior material for electrical storage devices which is used for an electrical storage device,

the electrical storage device including: an electrical storage device element including at least a positive electrode, a negative electrode, and an electrolyte; the exterior material for electrical storage devices which seals the electrical storage device element; and the metal terminal electrically connected to each of the positive electrode and the negative electrode and protruding to outside of the exterior material for electrical storage devices, wherein an adhesive film for metal terminal is interposed between the metal terminal and the exterior material for electrical storage devices, and
the adhesive film for metal terminal is the adhesive film for metal terminal according to any one of claims 1 to 4,
the exterior material for electrical storage devices comprising a laminate including at least a base material layer, a barrier layer and a heat-sealable resin layer.

14. A kit comprising: an exterior material for electrical storage devices which is used for an electrical storage device; and

the adhesive film for metal terminal according to any one of claims 1 to 4,

the electrical storage device including an electrical storage device element including at least a positive electrode, a negative electrode, and an electrolyte; the exterior material for electrical storage devices which seals the electrical storage device element; and the metal terminal electrically connected to each of the positive electrode and the negative electrode and protruding to outside of the exterior material for electrical storage devices,
the kit being used with the adhesive film for metal terminal being interposed between the metal terminal and the exterior material for electrical storage devices.

FIG. 1

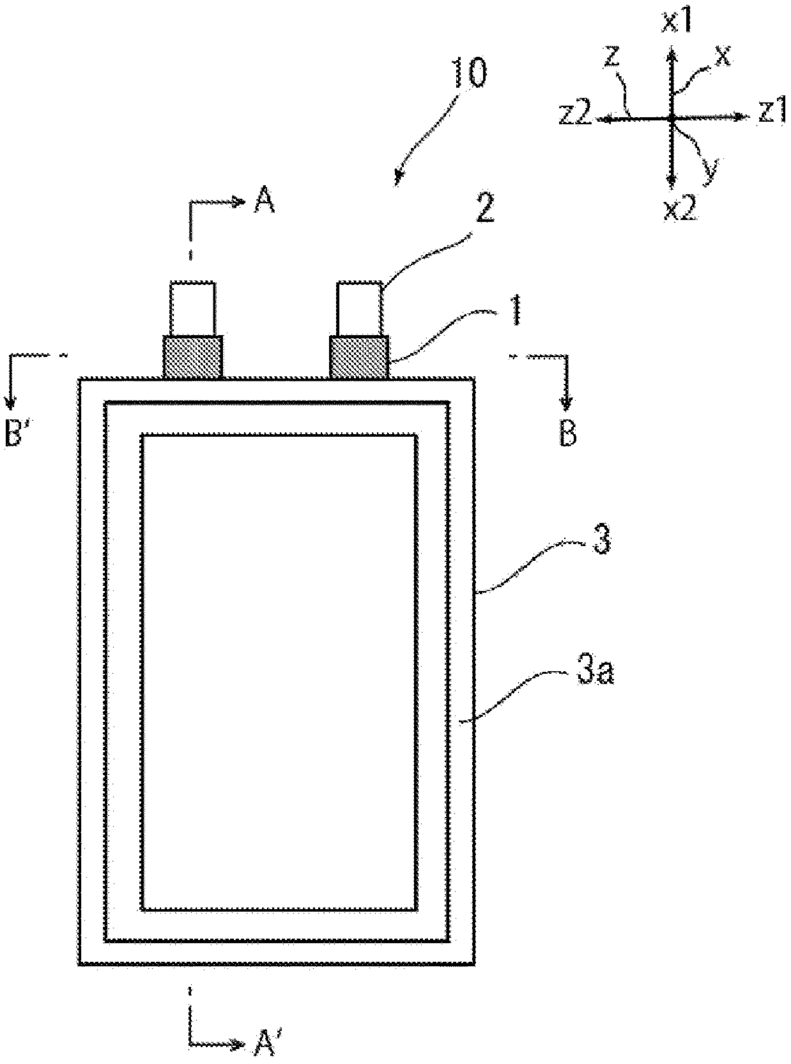

FIG. 2

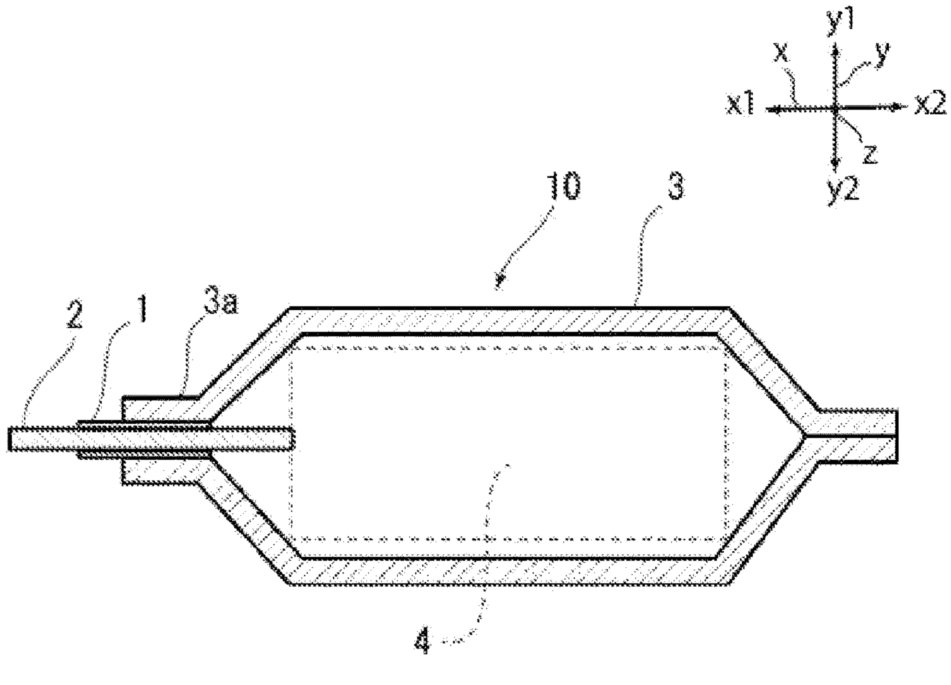

FIG. 3

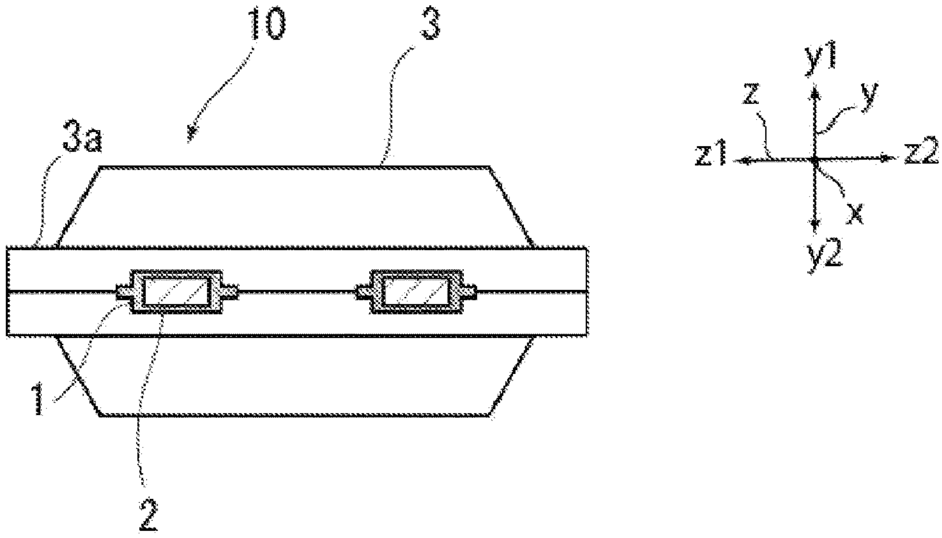


FIG. 4

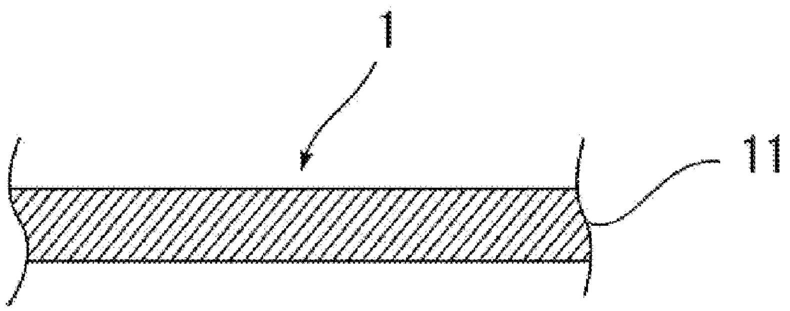


FIG. 5

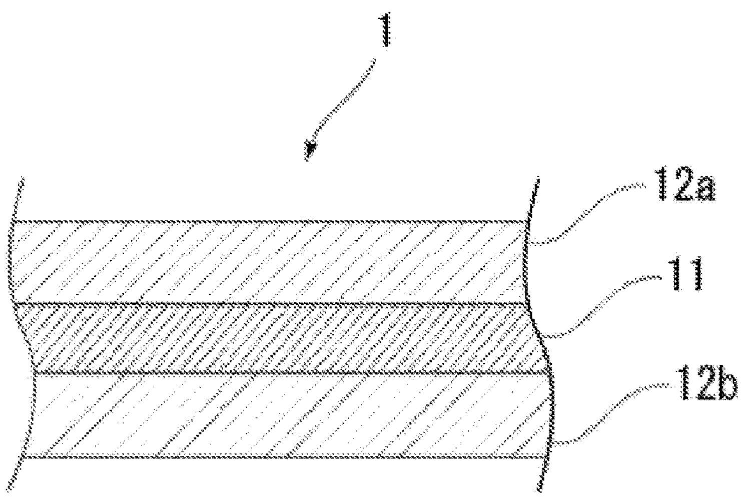

FIG. 6

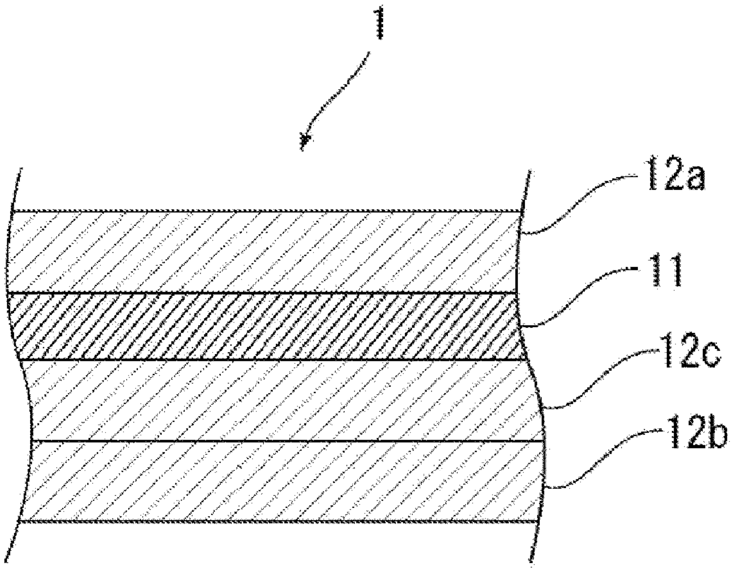


FIG. 7

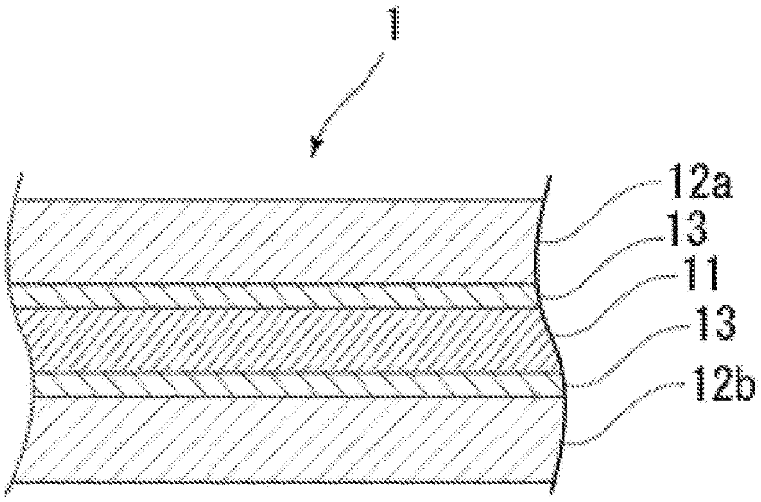

FIG. 8

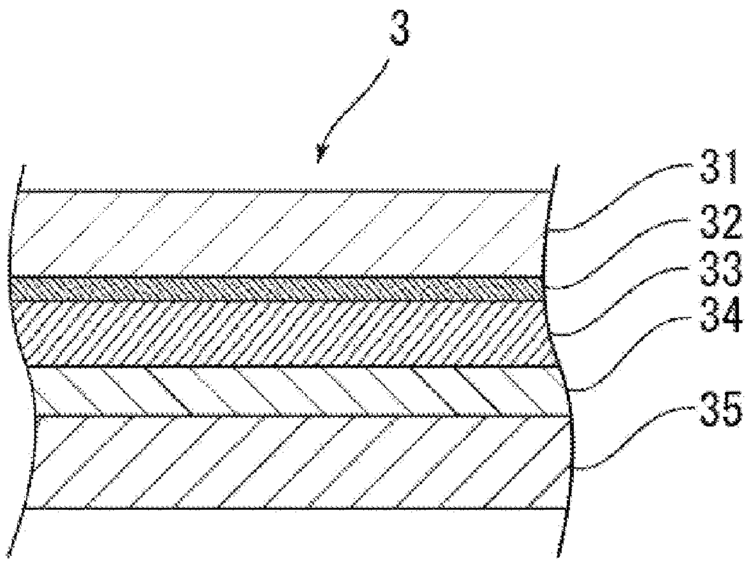

FIG. 9

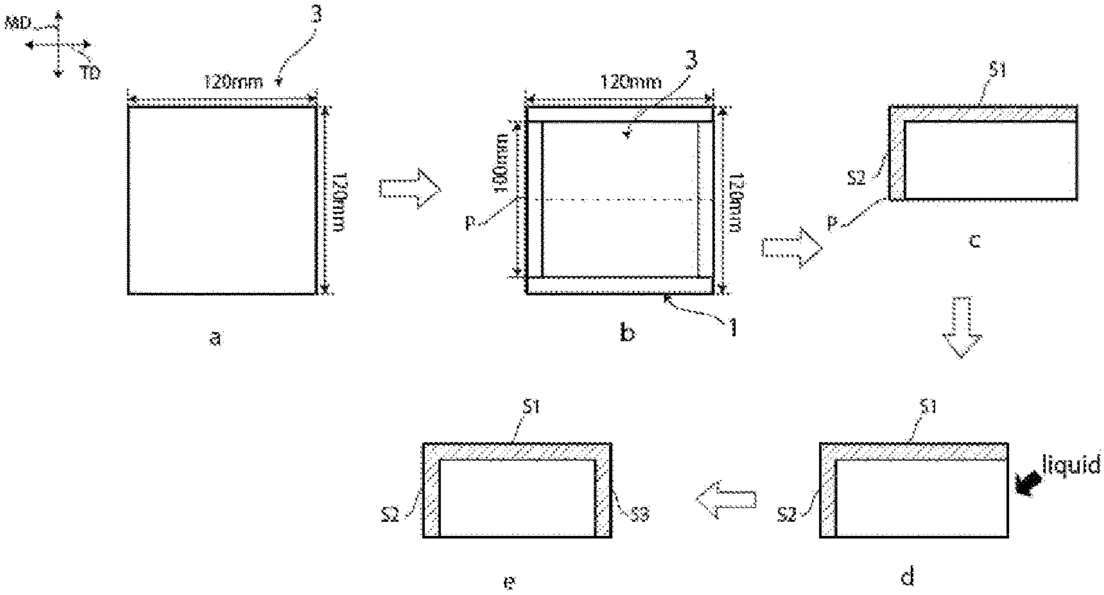


FIG. 10

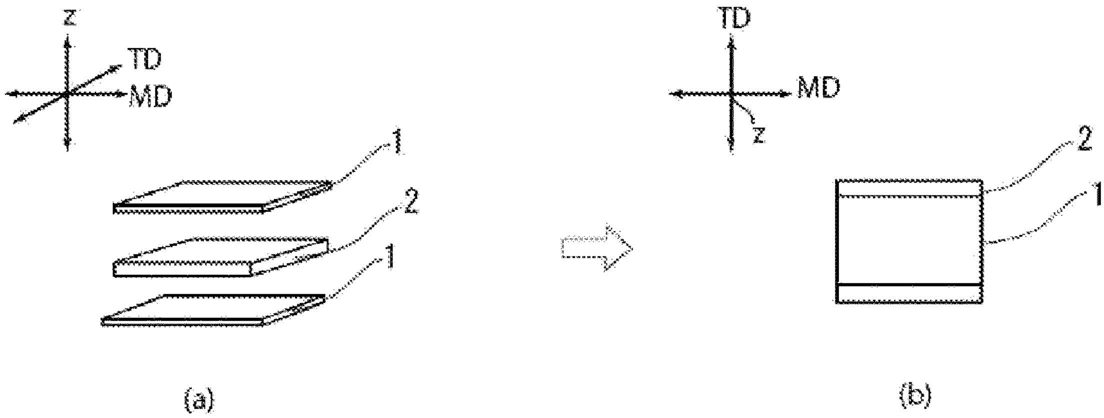


FIG. 11

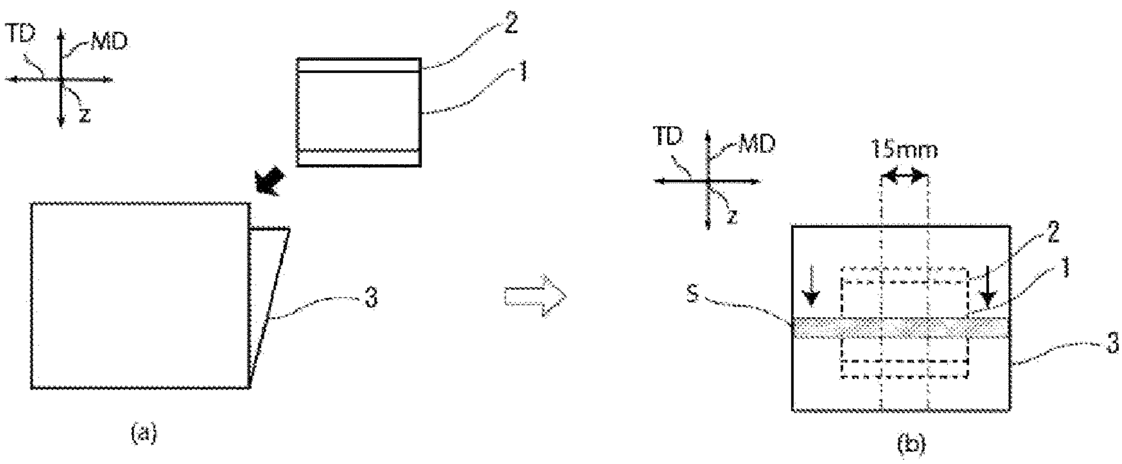

FIG. 12

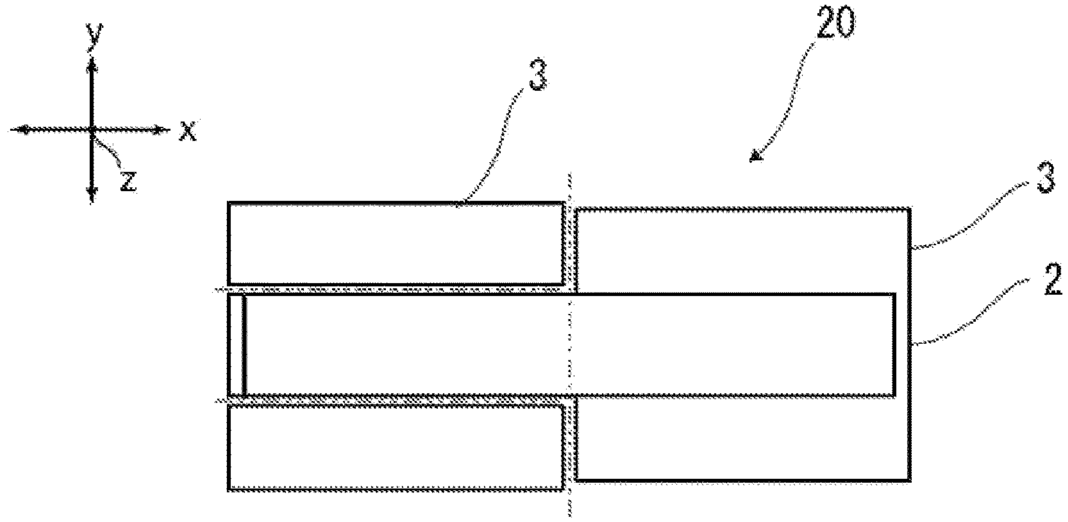


FIG. 13

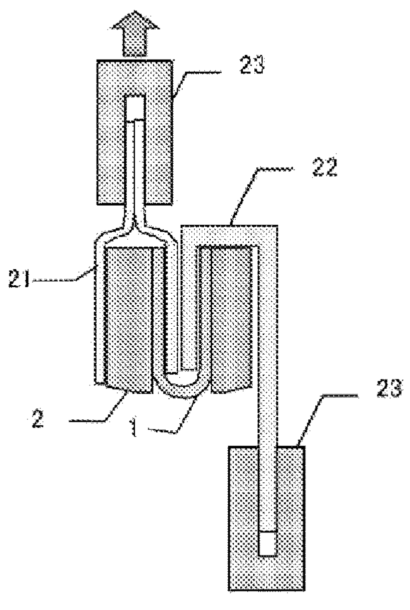

**INTERNATIONAL SEARCH REPORT**

International application No.
**PCT/JP2023/042420**

**A. CLASSIFICATION OF SUBJECT MATTER**

***H01M 50/178***(2021.01)i; ***H01G 11/74***(2013.01)i; ***H01G 11/78***(2013.01)i; ***H01M 50/105***(2021.01)i; ***H01M 50/184***(2021.01)i; ***H01M 50/534***(2021.01)i; ***H01M 50/557***(2021.01)i; ***H01M 50/562***(2021.01)i
FI: H01M50/178; H01M50/184 C; H01M50/557; H01M50/562; H01M50/534; H01M50/105; H01G11/78; H01G11/74

According to International Patent Classification (IPC) or to both national classification and IPC

**B. FIELDS SEARCHED**

Minimum documentation searched (classification system followed by classification symbols)

H01M50/178; H01G11/74; H01G11/78; H01M50/105; H01M50/184; H01M50/534; H01M50/557; H01M50/562

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | WO 2019/244971 A1 (DAI NIPPON PRINTING CO., LTD.) 26 December 2019 (2019-12-26) paragraphs [0048]-[0050], [0057], [0125]-[0127], [0131], table 2 (example 8, comparative example 1) | 1-6, 8-14<br>7 |
| X<br>Y | WO 2018/110702 A1 (DAI NIPPON PRINTING CO., LTD.) 21 June 2018 (2018-06-21) paragraphs [0041]-[0043], [0049], [0109], [0113], [0114], table 1 (comparative example 3) | 1-6, 8-14<br>7 |
| X | JP 2003-340960 A (DAI NIPPON PRINTING CO., LTD.) 02 December 2003 (2003-12-02) claims 1, 4, example 6, table 1 (example 6) | 1, 3-4, 6, 8-14 |
| Y | WO 2021/177424 A1 (DAI NIPPON PRINTING CO., LTD.) 10 September 2021 (2021-09-10) claims 3-4, paragraphs [0041], [0042], table 1 | 7 |

☐ Further documents are listed in the continuation of Box C.
☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **25 January 2024** | **06 February 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2023/042420**

| Patent document cited in search report | Publication date (day/month/year) | Patent family member(s) | Publication date (day/month/year) |
|---|---|---|---|
| WO 2019/244971 A1 | 26 December 2019 | US 2021/0234222 A1<br>paragraphs [0104]-[0106], [0114], [0207]-[0209], [0212], table 2 (example 8, comparative example 1)<br>EP 3813143 A1<br>CN 112335104 A<br>KR 10-2021-0021949 A | |
| WO 2018/110702 A1 | 21 June 2018 | CN 108886117 A<br>KR 10-2019-0089930 A | |
| JP 2003-340960 A | 02 December 2003 | (Family: none) | |
| WO 2021/177424 A1 | 10 September 2021 | US 2023/0116359 A1<br>claims 3-4, paragraphs [0060], [0061], table 1<br>EP 4116999 A1<br>CN 115280585 A<br>KR 10-2022-0147069 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2015079638 A